(19) Europäisches Patentamt

European Patent Office

Office européen des brevets

(11) **EP 4 400 991 A1**

(12) **EUROPEAN PATENT APPLICATION**
published in accordance with Art. 153(4) EPC

(43) Date of publication:
**17.07.2024 Bulletin 2024/29**

(21) Application number: **22874776.2**

(22) Date of filing: **23.09.2022**

(51) International Patent Classification (IPC):
***G06F 18/00*** *(2023.01)*

(52) Cooperative Patent Classification (CPC):
**G06N 3/0464; G06N 3/08; G06T 7/207**

(86) International application number:
**PCT/CN2022/120740**

(87) International publication number:
**WO 2023/051390 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 CN 202111165311**

(71) Applicant: **Huawei Technologies Co., Ltd.
Shenzhen, Guangdong 518129 (CN)**

(72) Inventors:
• **CAO, Xiya
Shenzhen, Guangdong 518129 (CN)**
• **ZHOU, Caifa
Shenzhen, Guangdong 518129 (CN)**
• **WANG, Yongliang
Shenzhen, Guangdong 518129 (CN)**
• **ZENG, Dandan
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **TRAJECTORY ESTIMATION MODEL TRAINING METHOD, TRAJECTORY ESTIMATION METHOD, AND DEVICE**

(57) This application relates to the field of data processing technologies, and specifically, to a method for training a trajectory estimation model, a trajectory estimation method, and a device. The method includes: obtaining first IMU data generated by a first inertial measurement unit in a first time period; obtaining second IMU data, where the first IMU data and the second IMU data use a same coordinate system, and the second IMU data and the first IMU data have a preset correspondence; extracting, in a feature extraction module, a first feature of the first IMU data, and extracting a second feature of the second IMU data; determining, in a label estimation module, a first label based on the first feature, and determining a second label based on the second feature; determining a first difference between the first label and the second label; and performing a first update on a parameter of the feature extraction module and a parameter of the label estimation module in a direction of reducing the first difference. This method can reduce dependence on data and improve trajectory estimation precision.

FIG. 2

## Description

This application claims priority to Chinese Patent Application No. 202111165311.X, filed with the China National Intellectual Property Administration on September 30, 2021 and entitled "METHOD FOR TRAINING TRAJECTORY ESTIMATION MODEL, TRAJECTORY ESTIMATION METHOD, AND DEVICE", which is incorporated herein by reference in its entirety.

## TECHNICAL FIELD

This application relates to the field of data processing technologies, and specifically, to a method for training a trajectory estimation model, a trajectory estimation method, and a device.

## BACKGROUND

When a navigation service is provided for a user, a user trajectory needs to be obtained. A trajectory obtaining solution is obtaining the user trajectory by using a satellite positioning technology (for example, a global positioning system (global positioning system, GPS)). Another solution is estimating the user trajectory based on IMU data measured by an inertial measurement unit (inertial measurement unit, IMU). In the solution for estimating the trajectory based on the IMU data, the user trajectory can be obtained in indoor and outdoor environments where availability of satellite positioning technologies is weak, so that services such as indoor navigation and augmented reality (augmented reality, AR) can be implemented.

Currently, there are the following two solutions for estimating the trajectory based on the IMU data.

(A) A trajectory estimation solution based on a physical principle model is provided. This solution has two implementations. One manner is performing trajectory estimation based on a double-integral strap-down inertial guidance system. This manner highly depends on precision of an inertial measurement unit, and therefore requires a heavy and expensive high-precision inertial measurement unit. The other manner is performing trajectory estimation via a trajectory calculation system based on gait detection. This manner requires to adjust a large quantity of parameters, and has poor trajectory estimation precision when a new gait feature is encountered.

(B) A data-driven trajectory calculation solution is provided. In this solution, a large quantity of truth value trajectories are required, and a high requirement is imposed on precision of the truth value trajectories. As a result, costs of the solution are high. In addition, in a scenario in which the truth value trajectories are not covered, trajectory calculation precision is greatly reduced.

## SUMMARY

Embodiments of this application provide a method for training a trajectory estimation model, a trajectory estimation method, and a device, to improve trajectory estimation precision.

According to a first aspect, an embodiment of this application provides a method for training a trajectory estimation model, where the trajectory estimation model includes a feature extraction module and a label estimation module, and the method includes: obtaining first IMU data generated by a first inertial measurement unit in a first time period, where the first inertial measurement unit moves along a first trajectory in the first time period; obtaining second IMU data, where the first IMU data and the second IMU data use a same coordinate system, and the second IMU data and the first IMU data have a preset correspondence; extracting, in the feature extraction module, a first feature of the first IMU data, and extracting a second feature of the second IMU data; determining, in the label estimation module, a first label based on the first feature, and determining a second label based on the second feature, where the first label and the second label correspond to a first physical quantity; determining a first difference between the first label and the second label; and performing a first update on a parameter of the feature extraction module and a parameter of the label estimation module in a direction of reducing the first difference.

In other words, in the method for training the trajectory estimation model provided in this embodiment of this application, the trajectory estimation model can be trained in a self-supervision manner. This reduces dependency on truth value data, and improves estimation precision and generalization of the trajectory estimation model.

In a possible implementation, the first physical quantity includes any one or more of a speed, a displacement, a step size, and a heading angle.

In other words, in this implementation, the trajectory estimation model used to estimate different physical quantities can be trained, and implement flexible trajectory estimation.

In a possible implementation, the first IMU data includes a first acceleration and a first angular velocity, and the obtaining second IMU data includes: rotating a direction of the first acceleration by a first angle along a first direction, and rotating a direction of the first angular velocity by the first angle along the first direction, to obtain the second IMU data.

In other words, in this implementation, the first IMU data can be rotated to obtain the second IMU data, and the first IMU data and the second IMU data can be used to implement rotation equivariance self-supervision training of the trajectory estimation model.

In a possible implementation, the determining a first label based on the first feature, and determining a second label based on the second feature include: determining a first initial label based on the first feature, and rotating a direction of the first initial label by the first angle along the first direction to obtain the first label; and determining a second initial label based on the second feature, and rotating a direction of the second initial label by the first angle along a second direction to obtain the second label, where the second direction is opposite to the first direction.

In other words, in this implementation, the label based on the first IMU data can be rotated and compared with the label based on the second IMU data, to obtain a loss function. Alternatively, the label based on the second IMU data can be rotated and compared with the label based on the first IMU data, to obtain a loss function. This can implement rotation equivariance self-supervision training of the trajectory estimation model.

In a possible implementation, the method further includes: obtaining device conjugate data of the first IMU data, where the device conjugate data is IMU data generated by a second inertial measurement unit in the first time period, and the second inertial measurement unit moves along the first trajectory in the first time period; extracting, in the feature extraction module, a feature of the device conjugate data; determining, in the label estimation module based on the feature of the device conjugate data, a label corresponding to the device conjugate data; and determining a device conjugate difference between the first label and the label corresponding to the device conjugate data; and the performing a first update on a parameter of the feature extraction module and a parameter of the label estimation module in a direction of reducing the first difference includes: performing the first update on the parameter of the feature extraction module and the parameter of the label estimation module in the direction of reducing the first difference and in a direction of reducing the device conjugate difference.

In other words, in this implementation, when rotation equivariance is performed on the trajectory estimation model, cross-device consistency self-supervision training can be performed on the trajectory estimation model by using IMU data generated by different inertial measurement units.

In a possible implementation, the method further includes: obtaining device conjugate data of the first IMU data, where the device conjugate data is IMU data generated by a second inertial measurement unit in the first time period, and the second inertial measurement unit moves along the first trajectory in the first time period; extracting, in the feature extraction module, a feature of the device conjugate data; determining a conjugate feature similarity between the first feature and the feature of the device conjugate data; and performing a second update on the parameter of the feature extraction module in a direction of improving the conjugate feature similarity.

In other words, in this implementation, cross-device consistency self-supervision training can be performed on the feature extraction module of the trajectory estimation model by using IMU data generated by different inertial measurement units.

In a possible implementation, the second IMU data is generated by a second inertial measurement unit in the first time period, and the second inertial measurement unit moves along the first trajectory in the first time period.

In other words, in this implementation, cross-device consistency self-supervision training can be performed on the trajectory estimation model by using IMU data generated by different inertial measurement units.

In a possible implementation, the first IMU data includes a first acceleration and a first angular velocity, and the method further includes: rotating a direction of the first acceleration by a first angle along a first direction, and rotating a direction of the first angular velocity by the first angle along the first direction, to obtain rotation conjugate IMU data of first IMU data; extracting, in the feature extraction module, a feature of the rotation conjugate IMU data; determining, in the label estimation module, a rotation conjugate label based on the feature of the rotation conjugate IMU data; and determining a rotation conjugate difference between the first label and the rotation conjugate label; and the performing a first update on a parameter of the feature extraction module and a parameter of the label estimation module in a direction of reducing the first difference includes: performing the first update on the parameter of the feature extraction module and the parameter of the label estimation module in the direction of reducing the first difference and in a direction of reducing the rotation conjugate difference.

In other words, in this implementation, when cross-device consistency self-supervision is performed on the trajectory estimation model, the IMU data can be rotated, to perform rotation equivariance self-supervision on the trajectory estimation model.

In a possible implementation, the method further includes: determining a similarity between the first feature and the second feature; and performing a second update on the parameter of the feature extraction module in a direction of improving the similarity between the first feature and the second feature.

In other words, in this implementation, cross-device consistency self-supervision training can be performed on the feature extraction module of the trajectory estimation model by using IMU data generated by different inertial measurement units.

In a possible implementation, the method further includes: obtaining an actual label of the first inertial measurement unit when the first inertial measurement unit moves along the first trajectory; and determining a label difference between the first label and the actual label; and the performing a first update on a parameter of the feature extraction module and a parameter of the label estimation module in a direction of reducing the first difference includes: performing the first update on the parameter of the feature extraction module and the parameter of the label estimation module in the direction of reducing the first difference and in a direction of reducing the label difference.

In other words, in this implementation, on the basis of performing self-supervision on the trajectory estimation model, truth value supervision can be performed on the trajectory estimation model, thereby further improving estimation precision of the trajectory estimation model.

In addition, in this embodiment of this application, a difference between a label and another label may be referred to as a label difference.

In a possible implementation, after the performing a first update on a parameter of the feature extraction module and a parameter of the label estimation module, the method further includes: extracting, in the feature extraction module after the first update, a third feature of the first IMU data; determining, in the label estimation module after the first update, a third label based on the third feature, where the third label includes an estimated speed; determining a first estimated trajectory of the first inertial measurement unit in the first time period based on duration of the first time period and the third label; determining a trajectory difference between the first estimated trajectory and the first trajectory; and performing a third update on the parameter of the feature extraction module and the parameter of the label estimation module in a direction of reducing the trajectory difference.

In other words, in this implementation, on the basis of performing self-supervision on the trajectory estimation model, trajectory-level supervision can be performed on the trajectory estimation model, thereby further improving estimation precision of the trajectory estimation model.

In a possible implementation, the determining a trajectory difference between the first estimated trajectory and the first trajectory includes: determining a length difference between a length of the first estimated trajectory and a length of the first trajectory, and determining an angle difference between a heading angle of the first estimated trajectory and a heading angle of the first trajectory; and the performing a third update on a parameter of the feature extraction module and a parameter of the label estimation module in a direction of reducing the trajectory difference includes: performing the third update on the parameter of the feature extraction module and the parameter of the label estimation module in a direction of reducing the length difference and in a direction of reducing the angle difference.

In other words, in this implementation, on the basis of performing self-supervision on the trajectory estimation model, trajectory length supervision can be performed on the trajectory estimation model, thereby further improving estimation precision of the trajectory estimation model in terms of trajectory length estimation.

According to a second aspect, an embodiment of this application provides a method for performing trajectory estimation by using a trajectory estimation model, where the trajectory estimation model is obtained through training according to the method provided in the first aspect, the trajectory estimation model includes a feature extraction module and a label estimation module, and the method includes: obtaining first measured IMU data of a first object, where the first measured IMU data is generated by an inertial measurement unit on the first object in a first time period; extracting, in the feature extraction module, a first feature of the first measured IMU data; determining, in the label estimation module based on the first feature of the first measured IMU data, a first measured label corresponding to the first object, where the first measured label corresponds to a first physical quantity; and determining a trajectory of the first object in the first time period based on the first measured label.

In other words, in the solution in this embodiment of this application, the trajectory estimation model obtained through training in the first aspect may be used to perform trajectory estimation, to obtain an estimated trajectory with high precision.

In a possible implementation, the first physical quantity includes any one or more of a speed, a displacement, a step size, and a heading angle.

In other words, in this implementation, flexible trajectory estimation may be implemented by estimating different physical quantities.

In a possible implementation, before the extracting a first feature of the first measured IMU data, the method further includes: obtaining second measured IMU data of the first object, where the first measured IMU data and the second measured IMU data use a same coordinate system, and the second measured IMU data and the first measured IMU data have a preset correspondence; extracting, in the feature extraction module, a second feature of the first measured IMU data, and extracting a feature of the second measured IMU data; determining, in the label estimation module, a second measured label based on the second feature of the first measured IMU data, and determining a third measured label based on the feature of the second measured IMU data, where the second measured label and the third measured label correspond to the first physical quantity, and the first physical quantity includes any one or more of a speed, a displacement, a step size, and a heading angle; determining a difference between the second measured label and the third measured label; and performing an update on a parameter of the feature extraction module and a parameter of the label estimation module in a direction of reducing a difference between the second measured label and the third measured label.

In other words, in this implementation, when the trajectory estimation model is used to perform trajectory estimation, self-supervision training may be first performed on the trajectory estimation model by using the measured IMU data, to update the trajectory estimation model, so that the trajectory estimation model can adapt to the measured IMU data. This improves adaptability of the trajectory estimation model to the measured IMU data, improves estimation precision of trajectory estimation performed by using the measured IMU data, and improves generalization of the trajectory estimation model.

In a possible implementation, the first measured IMU data includes a first measured acceleration and a first measured angular velocity, and the obtaining second measured IMU data of the first object includes: rotating a direction of the first measured acceleration by a first angle along a first direction, and rotating a direction of the first measured angular velocity by the first angle along the first direction, to obtain the second IMU data.

In other words, in this implementation, when the trajectory estimation model is used to perform trajectory estimation, rotation equivariance self-supervision training may be first performed on the trajectory estimation model by using the measured IMU data, to update the trajectory estimation model, so that the trajectory estimation model can adapt to the measured IMU data. This improves adaptability of the trajectory estimation model to the measured IMU data, improves estimation precision of trajectory estimation performed by using the measured IMU data, and improves generalization of the trajectory estimation model.

In a possible implementation, the second measured IMU data and the first measured IMU data are respectively generated by different inertial measurement units on the first object in the first time period.

In other words, in this implementation, when the trajectory estimation model is used to perform trajectory estimation, cross-device consistency self-supervision training may be first performed on the trajectory estimation model by using the measured IMU data, to update the trajectory estimation model, so that the trajectory estimation model can adapt to the measured IMU data. This improves adaptability of the trajectory estimation model to the measured IMU data, improves estimation precision of trajectory estimation performed by using the measured IMU data, and improves generalization of the trajectory estimation model.

According to a third aspect, an embodiment of this application provides a trajectory uncertainty determining method, including: obtaining a plurality of estimated results output by a plurality of trajectory estimation models, where the plurality of trajectory estimation models are in a one-to-one correspondence with the plurality of estimated results, the plurality of estimated results correspond to a first physical quantity, training processes of different trajectory estimation models in the plurality of trajectory estimation models are independent of each other, and training methods are the same; and determining a first difference between the plurality of estimated results, where the first difference represents an uncertainty of the first physical quantity, and the first difference is represented by a variance or a standard deviation.

In other words, in this embodiment of this application, a plurality of trajectory estimation models obtained through independent training may be used to perform trajectory estimation, to obtain a plurality of estimated results of a physical quantity. A difference between the plurality of trajectory estimated results of the physical quantity is analyzed, and an uncertainty of the physical quantity is obtained as a trajectory estimation quality indicator, to provide an indication for availability of the trajectory estimated result. This helps implement highly reliable trajectory estimation.

In a possible implementation, the first physical quantity is a speed.

In other words, in this implementation, a speed uncertainty may be determined, to provide an indication for availability of a trajectory estimated result, and help implement highly reliable trajectory estimation.

In a possible implementation, the method further includes: determining a first location corresponding to the estimated result; and determining a second difference between a plurality of first locations corresponding to the plurality of estimated results, where the plurality of first locations are in a one-to-one correspondence with the plurality of estimated results, the second difference represents an uncertainty of the first location, and the second difference is represented by using a variance or a standard deviation.

In other words, in this implementation, a location uncertainty may be determined, to provide an indication for availability of a trajectory estimated result, and help implement highly reliable trajectory estimation.

In a possible implementation, the estimated result is represented by using a three-dimensional space coordinate system, and the estimated result includes a first speed in a direction of a first coordinate axis of the three-dimensional space coordinate system and a second speed in a direction of a second coordinate axis of the three-dimensional space coordinate system; and the method further includes: determining a first change rate of a first heading angle at the first speed, and determining a second change rate of the first heading angle at the second speed, where the first heading angle is an angle on a plane on which the first coordinate axis and the second coordinate axis are located; and determining an uncertainty of the first heading angle based on the first change rate, the second change rate, an uncertainty of the first speed, and an uncertainty of the second speed.

In other words, in this implementation, a velocity change rate of a heading angle may be determined, and an uncertainty of the heading angle is determined by using an error propagation principle based on the velocity change rate of the heading angle and the speed uncertainty, so that an uncertainty in a stationary state or an approximately stationary state can be accurately estimated.

In a possible implementation, the determining a first change rate of a first heading angle at the first speed, and determining a change rate of the first heading angle at the second speed includes: obtaining a first expression by using the first speed and the second speed that represent a first heading angle; performing first-order partial derivative calculation of the first speed on the first expression, to obtain the first change rate; and performing first-order partial derivative calculation of the second speed on the first expression, to obtain the second change rate.

In other words, in this implementation, a geometric relationship between a speed and a heading angle may be used, the speed may be used to represent the heading angle, and then first-order partial derivative calculation is performed on a relational expression that is used to represent the heading angle, to obtain a change rate of the heading angle in terms of the speed.

According to a fourth aspect, an embodiment of this application provides a computing device, including a processor and a memory, where the memory is configured to store a computer program, and the processor is configured to execute the computer program to implement the method provided in the first aspect.

According to a fifth aspect, an embodiment of this application provides a computing device, including a processor and a memory, where the memory is configured to store a computer program, and the processor is configured to execute the computer program to implement the method provided in the second aspect.

According to a sixth aspect, an embodiment of this application provides a computing device, including a processor and a memory, where the memory is configured to store a computer program, and the processor is configured to execute the computer program to implement the method provided in the third aspect.

According to a seventh aspect, an embodiment of this application provides a computer-readable storage medium, including computer program instructions. When the computer program instructions are executed by a computing device, the computing device performs the method provided in the first aspect, the second aspect, or the third aspect.

According to an eighth aspect, an embodiment of this application provides a computer program product including instructions. When the instructions are run by a computing device, the computing device is enabled to perform the method provided in the first aspect, the second aspect, or the third aspect.

According to the method for training the trajectory estimation model, the trajectory estimation method, and the device provided in embodiments of this application, the trajectory estimation model may be trained in a self-supervision manner, so that estimation precision of the trajectory estimation model is improved in a case of low data dependency.

**BRIEF DESCRIPTION OF DRAWINGS**

FIG. 1 is a schematic diagram of a structure of a trajectory estimation model according to an embodiment of this application;

FIG. 2 is a schematic diagram of a system architecture according to an embodiment of this application;

FIG. 3 is a schematic diagram of rotation equivariance self-supervision training according to an embodiment of this application;

FIG. 4 is a schematic diagram of cross-device consistency self-supervision training according to an embodiment of this application;

FIG. 5 is a schematic diagram of trajectory-level decoupling supervision training according to an embodiment of this application;

FIG. 6 is a schematic diagram of a trajectory estimation solution according to an embodiment of this application;

FIG. 7 is a schematic diagram of a trajectory uncertainty determining solution according to an embodiment of this application;

FIG. 8A is a schematic diagram of a data preprocessing solution according to Embodiment 1 of this application;

FIG. 8B is a schematic diagram of a structure of a feature extraction module according to Embodiment 1 of this application;

FIG. 8C is a schematic diagram of a structure of a label estimation module according to Embodiment 1 of this application;

FIG. 8D is a schematic diagram of forward propagation of a trajectory estimation model according to Embodiment 1 of this application;

FIG. 8E is a schematic diagram of a loss function of rotation equivariance self-supervision according to Embodiment 1 of this application;

FIG. 8F is a schematic diagram of a loss function of cross-device consistency self-supervision according to Embodiment 1 of this application;

FIG. 8G is a schematic diagram of a loss function of truth value speed supervision according to Embodiment 1 of this application;

FIG. 9A is a schematic diagram of a data preprocessing solution in a trajectory-level decoupling supervision training phase according to Embodiment 1 of this application;

FIG. 9B is a schematic diagram of trajectory reconstruction in a trajectory-level decoupling supervision training phase according to Embodiment 1 of this application;

FIG. 9C is a schematic diagram of a loss function of total trajectory mileage supervision in a trajectory-level decoupling supervision training phase according to Embodiment 1 of this application;

FIG. 9D is a schematic diagram of a loss function of step point heading angle supervision in a trajectory-level decoupling supervision training phase according to Embodiment 1 of this application;

FIG. 10A is a schematic diagram of a data preprocessing phase according to Embodiment 2 of this application;

FIG. 10B is a schematic diagram of a training phase during inference according to Embodiment 2 of this application;

FIG. 10C is a schematic diagram of trajectory reconstruction according to Embodiment 2 of this application;

FIG. 11A is a schematic diagram of a form of an estimated trajectory in a trajectory estimation solution;

FIG. 11B is a schematic diagram of an estimated trajectory obtained by performing trajectory estimation by using a trajectory estimation model according to an embodiment of this application;

FIG. 11C is another schematic diagram of an estimated trajectory obtained by performing trajectory estimation by using a trajectory estimation model according to an embodiment of this application;

FIG. 12A is a schematic diagram of obtaining a plurality of mutually independent estimated speeds and a plurality of mutually independent estimated locations based on a plurality of independent speed estimation models;

FIG. 12B is a schematic diagram of determining a speed uncertainty and a location uncertainty;

FIG. 12C is a schematic diagram of a geometric relationship between a speed $v_x$, a speed $v_y$, and a heading angle $\theta$;

FIG. 13A is a schematic diagram of a trajectory uncertainty according to an embodiment of this application;

FIG. 13B is a schematic diagram of a trajectory uncertainty according to an embodiment of this application;

FIG. 13C is a schematic diagram of a trajectory uncertainty according to an embodiment of this application;

FIG. 14A is a schematic diagram of a speed uncertainty according to an embodiment of this application;

FIG. 14B is a schematic diagram of an uncertainty of a heading angle according to an embodiment of this application;

FIG. 14C is a schematic diagram of comparison between an estimated trajectory and a truth value trajectory according to an embodiment of this application;

FIG. 14D is a schematic diagram of comparison between an estimated trajectory and a truth value trajectory according to an embodiment of this application;

FIG. 15 is a flowchart of a trajectory estimation model training method according to an embodiment of this application;

FIG. 16 is a flowchart of a trajectory estimation method according to an embodiment of this application;

FIG. 17 is a flowchart of a trajectory uncertainty determining method according to an embodiment of this application; and

FIG. 18 is a schematic block diagram of a computing device according to an embodiment of this application.

## DESCRIPTION OF EMBODIMENTS

The following describes technical solutions of embodiments in this application with reference to accompanying drawings. Apparently, the embodiments described in this specification are merely a part rather than all of embodiments of this application.

In the descriptions of this specification, "an embodiment", "some embodiments", or the like indicates that one or more embodiments of this specification include a specific feature, structure, or feature described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In the descriptions of this specification, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this specification, "a plurality of" means two or more than two.

In the descriptions of this specification, the terms "first" and "second" are merely intended for description, and shall not be understood as an indication or implication of relative importance or implicit indication of a quantity of indicated technical features. Therefore, a feature limited by "first" or "second" may explicitly or implicitly include one or more features. The terms "include", "have", and their variants all mean "include but are not limited to", unless otherwise specifically emphasized in another manner.

A user trajectory needs to be obtained for an indoor navigation service and an indoor augmented reality (augmented reality, AR) service. However, it is difficult to obtain the user trajectory by using a satellite positioning technology indoors. In this case, IMU data is usually used to estimate the user trajectory.

In Solution A1, IMU data in a specific period of time is divided into a plurality of windows, displacements of the windows are separately estimated based on IMU data of each window and by using a deep learning model, and a trajectory is estimated based on an angle change between displacements of adjacent windows. In this solution, in an inference process of the deep learning model, a parameter remains unchanged, and it is difficult to adapt to a new gait. In addition, an estimated trajectory length in this solution is short.

In Solution A2, a posture of an inertial measurement unit (inertial measurement unit, IMU) in a world coordinate system is detected based on a geomagnetic sensor, and a movement vector of a user is converted into a movement vector in the world coordinate system based on the posture, to estimate a location of the user, to obtain the user trajectory. This solution depends on the geomagnetic sensor and is applicable to limited scenarios. In addition, this solution is also difficult to adapt to a new gait.

In Solution A3, trajectory estimation is performed with reference to GPS data and IMU data. This solution depends on a GPS technology and cannot be applied to indoor scenarios without a GPS or outdoor scenarios with a weak GPS. In addition, this solution is also difficult to adapt to the new gait.

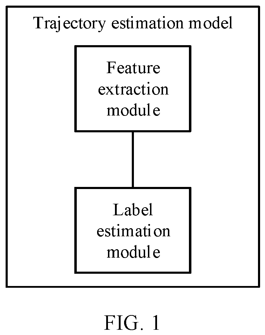

Refer to FIG. 1. An embodiment of this application provides a trajectory estimation model. The trajectory estimation model may include a feature extraction module and a label estimation module. The feature extraction module may extract a feature of IMU data, and input the extracted feature into the label estimation module. The label estimation module may output, based on the feature, a label corresponding to a physical quantity A.

The physical quantity A may be any one or more of a displacement, a speed, a step size, or a heading angle. When the physical A is the speed, the speed includes a size (that is, a rate) of the speed and a direction of the speed. Similarly, when the physical quantity A is the displacement, the displacement includes a length and a direction of the displacement. For example, the physical quantity A may be the step size and the heading angle. In some embodiments, the label output by the label estimation module is specifically the physical quantity A. In some embodiments, the label output by the label estimation module is in direct proportion to the physical quantity A.

In some embodiments, the trajectory estimation model may be a neural network. In some embodiments, the trajectory estimation model may be a support vector machine, or the like. A specific form of the trajectory estimation model is not limited in this embodiment of this application.

In this embodiment of this application, the trajectory estimation model can be trained by using a self-supervision learning method. This not only reduces dependency on truth value data, but also improves estimation precision of the trajectory estimation model. In addition, when the trajectory estimation model is subsequently used for trajectory estimation, a parameter of the trajectory estimation model can be updated to adapt to a new gait. In addition, when the trajectory estimation model is trained, a length and a heading angle of a trajectory can be separately supervised, so that accuracy of estimating the length of the trajectory by the trajectory estimation model is improved, and accuracy of estimating the heading angle of the trajectory by the trajectory estimation model is also improved. In addition, a plurality of trajectory estimation models may be independently trained, then different trajectory estimation models in the plurality of trajectory estimation models are used to perform trajectory estimation, and an uncertainty of trajectory estimation is calculated based on trajectory estimated results output by the different trajectory estimation models, to evaluate reliability of an output result of the trajectory estimation model.

IMU data refers to data measured by an inertial measurement unit, and may include an acceleration and an angular velocity measured by the inertial measurement unit.

Truth value data refers to data that can represent a real trajectory or an actual trajectory and that is obtained in an experimental environment. In embodiments of this application, the truth value data may be obtained by using an optical movement capture system (for example, vicon®), or the truth value data may be obtained by using a visual tracking technology (for example, simultaneous localization and mapping (simultaneous localization and mapping, SLAM)).

A gait is a posture of the inertial measurement unit or a posture of a device where the inertial measurement unit is located. A posture of an object may be an angle at which the object is placed in three-dimensional space. Postures of devices in which the inertial measurement unit is located are different. As a result, a posture of the inertial measurement unit is also different. It may be understood that a terminal device such as a mobile phone, a tablet computer, or an intelligent wearable device usually has an inertial measurement unit. In different usage scenarios of the terminal device, the terminal device has different postures. For example, a posture of a terminal device in a scenario in which a user makes a call while walking is usually different from a posture of the terminal device in a scenario in which the user takes a photo while walking. For another example, when a user walks, a handheld terminal device keeps swinging with an arm of the user, and a posture of a terminal device also keeps changing.

The length of the trajectory is a length of the trajectory in three-dimensional space. In embodiments of this application, the length of the trajectory may be a sum of lengths of adjacent step points. A step point is a displacement in a unit time, and a length of the step point is a size of the displacement. The heading angle of the trajectory refers to an angle of the trajectory in three-dimensional space. The heading angle of the trajectory may be formed by heading angles of step points that form the trajectory. The heading angle of the step point is an angle of the step point in three-dimensional space.

Next, a training solution and an inference solution of the trajectory estimation model are described. The inference solution is a solution of performing trajectory estimation by using the trajectory estimation model.

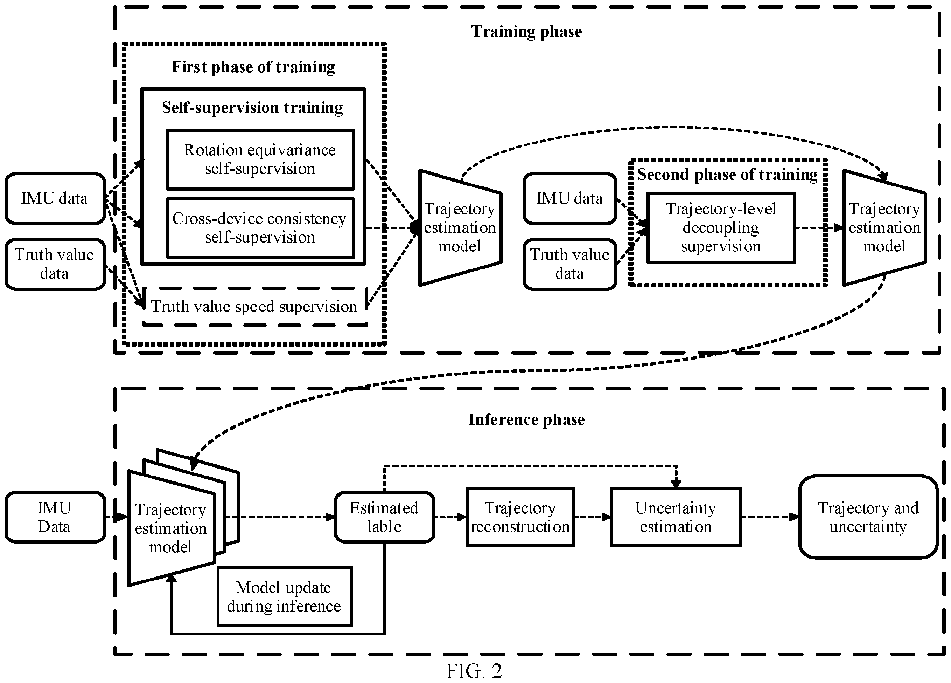

FIG. 2 shows a system architecture according to an embodiment of this application. As shown in FIG. 2, the system architecture may be divided into a training phase and an inference phase.

The training phase may be performed by a training apparatus, and the training apparatus may be disposed on any device, platform, or cluster that has a data computing and processing capability.

In the training phase, a trajectory estimation model may be trained. Specifically, a parameter of the trajectory estimation model may be updated in a direction of reducing a loss function (loss). Before the trajectory estimation model is trained, a parameter of a speed estimation module may be randomly set.

Refer to FIG. 2. Self-supervision training may be performed in a first phase of training. Self-supervision training is a training manner of updating a parameter of the trajectory estimation model when no truth value data is required.

In some embodiments, as shown in FIG. 2, self-supervision training may include rotation equivariance (rotation equivariance) self-supervision for training rotation equivariance of the trajectory estimation model. Rotation equivariance of the model means that input of the model is rotated, and output of the model is also rotated. Specifically, in the trajectory estimation model provided in this embodiment of this application, rotation equivariance means that IMU data input into the trajectory estimation model is rotated, and a same rotation occurs at a speed output by the trajectory estimation model. Rotating the IMU data specifically refers to rotating directions of an angular velocity and an acceleration in the IMU data.

It may be understood that a good trajectory estimation model should have rotation equivariance. For example, when a user moves at a speed A, an inertial measurement unit worn by the user generates IMU data A1; and when the user moves at a speed B, the inertial measurement unit worn by the user generates IMU data B1. If there is an included angle C between a direction of the speed A and a direction of the speed B, there is also an included angle C between the IMU data A1 and the IMU data B1. In this way, it is assumed that when the speed A is the same as the speed B, and the IMU data B1 may be obtained by rotating the IMU data A1 by the included angle C. Therefore, the IMU data A1 that is rotated by the included angle C is input into the trajectory estimation model with rotation equivariance, and the model may output the speed B. Similarly, if the IMU data A1 that is rotated by the angle C is input into the trajectory estimation model, and if the model outputs the speed B, it indicates that the trajectory estimation model has rotation equivariance.

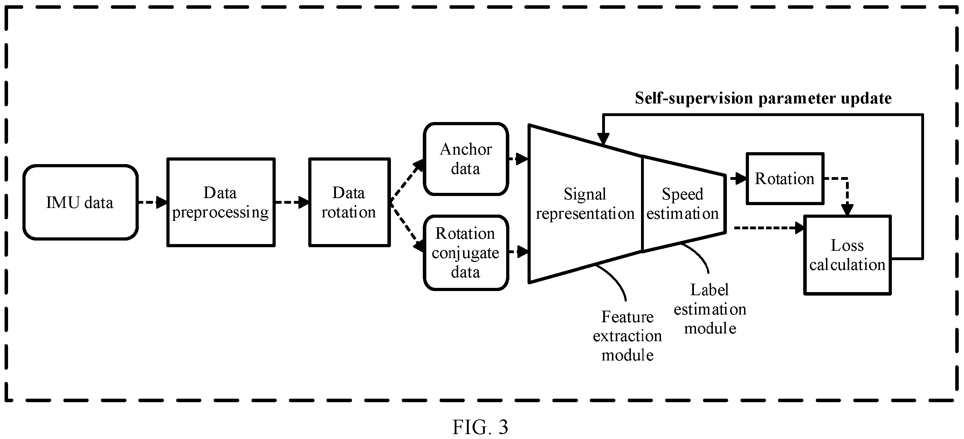

Based on the foregoing principle, rotation equivariance self-supervision training may be performed on the trajectory estimation model. Next, with reference to FIG. 3, an example of rotation equivariance self-supervision training is described.

Refer to FIG. 3. IMU data in a time period t1 may be obtained. The IMU data in the time period t1 refers to IMU data generated by an inertial measurement unit in the time period 11. In some embodiments, the inertial measurement unit collects IMU data in real time, and a training apparatus may read the IMU data at a preset reading frequency through an interface between the training apparatus and the inertial measurement unit. In this way, in a normal case, IMU data of a preset quantity of times may be read in the time period 11. The IMU data of the preset quantity of times may be referred to as the IMU data of the time period 11, and IMU data read once may also be referred to as one piece of IMU data. In other words, the IMU data of the time period t1 may include a plurality of pieces of IMU data. In an example, the time period t1 may be set to 1 second, and the preset frequency is 100 Hz. In this way, in a normal case, IMU data may be read 100 times in the time period t1, and the IMU data of the 100 times may be referred to as the IMU data in the time period t1. The IMU data of the time period t1 may be used as an independent data point, and is used to estimate or predict a speed of the time period t1.

In some embodiments, refer to FIG. 3. Before the IMU data of the time period t1 is input into the trajectory estimation model, the IMU data of the time period t1 may be preprocessed. It may be understood that the IMU data obtained from the inertial measurement unit may be affected by factors such as sensor reliability and device noise. Therefore, the IMU data in the time period t1 needs to be preprocessed.

In an example, preprocessing the IMU data in the time period t1 includes data check sampling. Specifically, it may be determined that the data read from the inertial measurement unit in the time period t1 meets a preset condition. In an example, the preset condition is specifically whether a quantity of times of reading the IMU data is greater than or equal to a preset threshold. If the quantity of times of reading the IMU data is greater than or equal to the preset threshold, it is considered that the IMU data read in the time period t1 is qualified, and it is determined that the data is successfully read. If the quantity of times of reading the IMU data is less than the preset threshold, it is considered that the IMU data read in the time period t1 is unqualified, and it is determined that the data fails to be read. In another example, the preset condition may be specifically whether a reading time difference between two adjacent pieces of IMU data in the IMU data in the time period t1 is less than preset duration. The adjacent two pieces of IMU data refer to two pieces of IMU data that are read at adjacent time. If a reading time difference between two adjacent pieces of IMU data in each group of IMU data in the time period t1 is less than the preset duration, it is determined that the data is successfully read. If a reading time difference between two adjacent pieces of IMU data in one or more groups of IMU data in the time period t1 is not less than the preset duration, it is determined that the data fails to be read.

In an example, preprocessing the IMU data in the time period t1 includes interpolation and sampling. The IMU data of the time period t1 may be regenerated based on the IMU data that is successfully read in the time period 11. Specifically, piecewise linear fitting may be performed on the IMU data that is successfully read in the time period t1, to obtain a curve. Then, a value is evenly obtained on the curve based on a preset reading frequency to obtain the IMU data of the time period t1. For example, the time period t1 is set to 1 second, the preset reading frequency is 100 Hz, and 95 pieces of IMU data are successfully read in the time period 11. Linear fitting may be performed on the 95 pieces of IMU to obtain a curve. Then, 100 pieces of IMU data are evenly selected on the curve based on the frequency of 100 Hz, where a time difference between two adjacent pieces of IMU data is 10 ms. In this way, IMU data with evenly distributed timestamps may be obtained, and IMU data of the time period t1 is formed based on the IMU data with the evenly distributed timestamps.

In an example, the preprocessing the IMU data in the time period t1 includes: rotating a Z axis of a coordinate system sampled by the IMU data to coincide with a gravity direction. That is, in this example, a world coordinate system is used to represent the IMU data.

Still refer to FIG. 3. The IMU data in the time period t1 may be used as anchor data for rotation processing. The rotated IMU data may be referred to as rotation conjugate data. That is, the anchor data is IMU data that is not rotated, and the rotation conjugate data is data obtained after the anchor data is rotated. Rotating of the anchor data includes rotating of an acceleration in the anchor data and rotating of an angular velocity in the anchor data.

The anchor data may be rotated by an angle θ along any direction D1 in the three-dimensional space, to obtain the rotation conjugate data. That is, data obtained by rotating the anchor data by the angle θ along any direction D1 in the three-dimensional space is referred to as the rotation conjugate data. The angle θ is greater than 0° and less than 360°. In some embodiments, the anchor data may be rotated in different directions at a same or different rotation angles, to obtain a plurality of pieces of rotation conjugate data. In an example, on a plane defined by a coordinate axis X and a coordinate axis Y, an Z axis as a rotation axis, four angles may be randomly selected, 72°, 144°, 216°, and 288° are centers, and ±18° are a range, to rotate the anchor data, to obtain four groups of rotation conjugate data. Each group of rotation conjugate data may be combined with the anchor data to perform rotation equivariance self-supervision training on the trajectory estimation model.

In the following, when the anchor data and the rotation conjugate data are not particularly distinguished, the anchor data and the rotation conjugate data may be referred to as the IMU data for short.

It should be noted that angle rotation is a manner of obtaining the rotation conjugate data. This embodiment of this application is not limited to this manner. In another embodiment, the rotation conjugate data may be obtained in another manner. Details are not described herein again.

In addition, in the following, the solution in this embodiment of this application is described by using an example in which a label output by the label estimation module has a speed.

The IMU data may be input into the feature extraction module of the trajectory estimation model, to extract a feature of the anchor data and a feature of the rotation conjugate data. The extracted feature may be represented by using a vector. Specifically, embedding (embedding) processing may be performed on the IMU data to obtain a representation vector of the IMU data. Then, the representation vector of the IMU data is input to the feature extraction module, and in the feature extraction module, an operation is performed on the representation vector of the IMU data by using a related parameter, to extract a feature of the IMU data, to obtain a feature vector of the IMU data. This process may also be referred to as signal representation of the IMU data. The feature vector of the anchor data may be referred to as an anchor vector, and the feature vector of the rotation conjugate data may be referred to as a rotation conjugate vector.

In some embodiments, as described above, the IMU data of the time period t1 may be used as an independent data point, and is used to estimate or predict a speed of the time period 11. The IMU data in the time period t1 includes a plurality of pieces of IMU data that are read at different times. Therefore, the IMU data input to the feature extraction module is a time sequence signal, and the feature of the IMU data may be extracted by using a one-dimensional (1-dimensional) convolution (Conv1D) trajectory estimation model.

For example, the feature extraction module may include a plurality of one-dimensional convolutional layers disposed in series, and each convolutional layer may include one or more convolution kernels. The convolution kernel may also be referred to as a convolution window. Each convolution window has a specific coverage area. The coverage range may be understood as a width, and may be represented by using an amount of IMU data. For example, a coverage area of one convolution window is Z pieces of IMU data. When convolution processing is performed by using the convolution window, convolution processing may be performed on the Z pieces of IMU data covered by the convolution window, to obtain a feature vector of the IMU data extracted at a current layer. Convolution processing may be performing an operation on the Z pieces of IMU data by using a parameter corresponding to the convolution window, to obtain the feature vector of the IMU data. The convolutional layer may output the feature vector of the IMU data to a next convolutional layer of the convolutional layer, and the next convolutional layer may continue to perform convolution processing on the feature vector of the IMU data.

The feature extraction module may input the feature of the IMU data extracted by the feature extraction module into the label estimation module. The label estimation module may calculate a speed with a size and a direction based on the feature of the IMU data. Specifically, in the label estimation module, an anchor speed may be calculated based on the anchor vector, and a rotation conjugate speed may be calculated based on the rotation conjugate vector.

According to the foregoing solution, the anchor speed corresponding to the anchor data and the rotation conjugate speed corresponding to the rotation conjugate data may be obtained.

Still refer to FIG. 3. The anchor data or the rotation conjugate speed may be rotated. The following separately describes the two cases.

In some embodiments, it may be set that the rotation conjugate data is obtained by rotating the anchor data by the angle θ along the direction D1. In this case, the anchor speed may be rotated by the angle θ along the direction D1, to obtain an anchor pseudo speed. Then, the anchor pseudo speed and the rotation conjugate speed can be compared to calculate a difference between them. A parameter of the feature extraction module and a parameter of a speed extraction layer may be updated by using the difference between the anchor pseudo speed and the rotation conjugate speed as a loss function. That is, the parameter of the feature extraction module and the parameter of the speed extraction layer may be updated in a direction of reducing the difference between the anchor pseudo speed and the rotation conjugate speed, to perform rotation equivariance self-supervision training. The difference between the anchor pseudo speed and the rotation conjugate speed may be referred to as a rotation conjugate difference.

In some embodiments, it may be set that the rotation conjugate data is obtained by rotating the anchor data by the angle θ along the direction D1. The rotation conjugate speed may be rotated by the angle θ along a direction D2, to obtain a rotation conjugate pseudo speed. The direction D2 is opposite to the direction D1. Then, the anchor speed and the rotation conjugate pseudo speed can be compared to calculate a difference between them. The parameter of the feature extraction module and the parameter of the speed extraction layer may be updated by using the difference between the anchor speed and the rotation conjugate pseudo speed as a loss function. That is, the parameter of the feature extraction module and the parameter of the speed extraction layer may be updated in a direction of reducing the difference between the anchor speed and the rotation conjugate pseudo speed, to perform rotation equivariance self-supervision training. The difference between the anchor speed and the rotation conjugate pseudo speed may be referred to as the rotation conjugate difference.

The foregoing example describes a solution of rotation equivariance self-supervision training. In some embodiments, back to FIG. 2, cross-device consistency (cross-device consistency) self-supervision may also be performed along with rotation equivariance self-supervision. The following describes cross-device consistency self-supervision.

It may be understood that an object may carry or carry two or more devices having inertial measurement units, that is, the object carries or is mounted with a plurality of inertial measurement units. For example, a user may carry a plurality of devices such as a mobile phone and a smartwatch, and the plurality of devices are configured with inertial measurement units. That is, the user carries a plurality of inertial measurement units. For a plurality of inertial measurement units carried or mounted on a same object, when the object moves, the plurality of inertial measurement units may work simultaneously to obtain IMU data.

Cross-device consistency self-supervision refers to self-supervision learning by using the IMU data measured by the plurality of inertial measurement units carried or mounted on the same object due to movement of the object. Next, an inertial measurement unit I1 and an inertial measurement unit I2 are set as an example to describe cross-device consistency supervision.

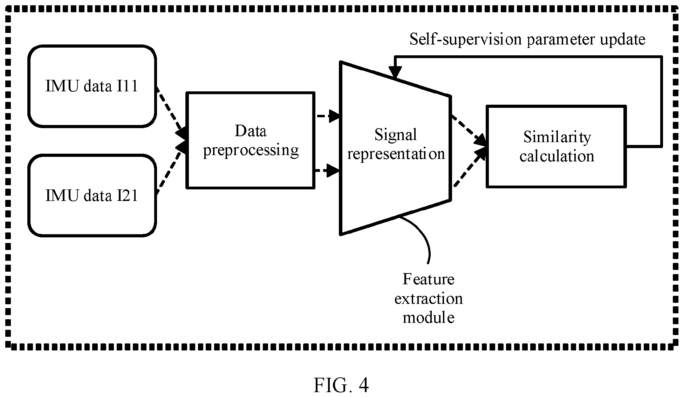

It may be set that the inertial measurement unit I1 and the inertial measurement unit I2 are carried on a same object, and when the object moves, IMU data I11 and IMU data I21 are respectively generated, where the IMU data I11 and the IMU data I21 are generated at a same time point. Refer to FIG. 4. The IMU data I11 may be input to a feature extraction module of a trajectory estimation model, and signal representation is performed to obtain a feature of the IMU data I11. The IMU data I21 may be input to the feature extraction module, and signal representation is performed to obtain a feature of the IMU data I21. The feature of the IMU data I11 may be represented by using a feature vector I12. In other words, the feature extraction module may output the feature vector I12 to represent the feature of the IMU data I11. The feature of the IMU data I21 may be represented by using a feature vector I22. In other words, the feature extraction module may output the feature vector I22 to represent the feature of the IMU data I21.

The IMU data I21 may also be referred to as device conjugate data of the IMU data I11.

For example, before the IMU data I11 and the IMU data I21 are input to the feature extraction module, data preprocessing may be performed on the IMU data I11 and the IMU data I21 first. For a data preprocessing solution, refer to the foregoing description of FIG. 3. Details are not described herein again.

In some embodiments, still refer to FIG. 4. A similarity S1 between the feature of the IMU data I11 and the feature of the IMU data I21 may be calculated. The similarity S1 between the feature of the IMU data I11 and the feature of the IMU data I21 may also be referred to as a conjugate feature similarity between the feature of the IMU data I11 and the feature of the IMU data I21. Then, in a direction of improving the similarity S1, a parameter of the feature extraction module is updated, to perform cross-device consistency self-supervision training. It may be understood that IMU data generated at a same moment by different inertial measurement units carried on a same object due to movement of the object corresponds to a point on a trajectory of the object. Therefore, the features extracted by the feature extraction module from the IMU data I11 and the IMU data I21 should be similar. Therefore, in a direction of improving the similarity S1, the parameter of the feature extraction module is updated, so that a model with higher precision can be trained.

In some embodiments, the feature of the IMU data I11 and the feature of the IMU data I21 may be input into a label estimation module of the trajectory estimation model. In the label estimation module, a speed I13 is determined based on the feature of the IMU data I11, and a speed I23 is determined based on the feature of the IMU data I21. Then, parameters of each layer in the trajectory estimation model may be updated by using a difference between the speed I13 and the speed I23 as a loss function. In other words, the parameters of each layer in the trajectory estimation model may be updated in a direction of reducing the difference between the speed I13 and the speed I23. Specifically, the parameter of the feature extraction module and the parameter of the label estimation module may be updated. The difference between the speed I13 and the speed I23 may be referred to as a device conjugate difference.

The foregoing example describes a solution of cross-device consistency self-supervision training. In some embodiments, back to FIG. 2, truth value speed supervision may also be performed in conjunction with rotation equivariance self-supervision and/or cross-device consistency self-supervision. The following describes truth value speed supervision.

A truth value speed can be obtained. The truth value speed refers to an actual speed of an object and can be obtained in a lab environment. In one example, the truth value speed may be obtained by using a computer vision technology. For details, refer to descriptions in the conventional technology, and details are not described herein again. In addition, in this embodiment of this application, a speed obtained through calculation based on the IMU data by using an estimation speed model may be referred to as an estimated speed.

The IMU data can be input into the trajectory estimation model. The trajectory estimation model can output the estimated speed based on the IMU data. For details, refer to the foregoing description of the trajectory estimation model. Details are not described herein again.

The estimated speed and the truth value speed may be compared to obtain a difference between the estimated speed and the truth value speed. Then, the parameters of each layer in the trajectory estimation model are updated by using the difference between the estimated speed and the truth value speed as a loss function. In other words, the parameters of each layer in the trajectory estimation model may be updated in a direction of reducing the difference between the estimated speed and the truth value speed. Specifically, the parameter of the feature extraction module and the parameter of the label estimation module may be updated.

Three training solutions are introduced above: rotation equivariance self-supervision, cross-device consistency self-supervision and truth value speed supervision. The trajectory estimation model may be trained by using the three training solutions, or the trajectory estimation model may be trained by using any one or two of the training solutions.

As described above, loss functions of the three training solutions are different. A loss function of the rotation equivariance self-supervision solution is a difference between an anchor speed and a rotation conjugate pseudo speed. A loss function of the cross-device consistency self-supervision solution is a difference between different speeds (for example, a speed I13 and a speed I23) estimated based on IMU data measured by different inertial measurement units. A loss function of the truth value speed supervision solution is a difference between an estimated speed and a truth value speed.

When the three training solutions are used, weights may be respectively set for the three training solutions. For example, a weight of the rotation equivariance self-supervision solution is Q1, a weight of the cross-device consistency self-supervision solution is Q2, and a weight of the truth value speed supervision solution is Q3. Q1+Q2+Q3=1. In an example, Q1 is 0.4, Q2 is 0.1, and Q3 is 0.5. Loss functions of each training solution are multiplied by corresponding weights, and are summed to obtain a total loss. Then, to reduce the total loss, a parameter of the speed model is updated.

When any two of the three training solutions are used, weights may be separately set for the two solutions. For example, both the rotation equivariance self-supervision solution and the truth value speed supervision solution may be used. In this case, a weight of the rotation equivariance self-supervision solution may be set to q1, and a weight of the truth value speed supervision solution may be set to q2. q1+q2=1. Loss functions of each training solution are multiplied by corresponding weights, and are summed to obtain a total loss. Then, to reduce the total loss, a parameter of the speed model is updated.

In some embodiments, back to FIG. 2, training of the trajectory estimation model may be divided into two phases. A first phase of training is to train the trajectory estimation model by using any one or more of training solutions such as rotation equivariance self-supervision, cross-device consistency self-supervision, and truth value speed supervision. The second phase of training is to retrain the trajectory estimation model by using trajectory-level decoupling supervision.

It may be understood that when a label output by the label estimation module is another physical quantity, training of the trajectory estimation model may be implemented with reference to the foregoing training solution. For example, when the label output by the label estimation module is a displacement, IMU data of preset duration may be collected and input into the trajectory estimation model, and the label estimation module may directly output the displacement. During training, a truth value displacement may be used as a supervised quantity to perform supervised training. The truth value displacement refers to an actual displacement of an object, which can be obtained in a lab environment. In an example, the truth value displacement may be obtained by using the computer vision technology. For details, refer to the description in the conventional technology. Details are not described herein again. When the label output by the label estimation module is a step size, IMU data of preset duration may be collected and input into the trajectory estimation model, and the label estimation module may directly output the step size. During training, a truth value step size may be used as a supervised quantity to perform supervised training. The truth value step size is an actual step size of an object, which can be obtained in a lab environment. In an example, the truth value step size may be obtained by using the computer vision technology. For details, refer to the description in the conventional technology. Details are not described herein again. When the label output by the label estimation module is a heading angle, IMU data of preset duration may be collected and input into the trajectory estimation model, and the label estimation module may directly output the heading angle. During training, a truth value heading angle may be used as a supervised quantity to perform supervised training. The truth value heading angle refers to an actual heading angle of an object, which can be obtained in a lab environment. In an example, the truth value heading angle may be obtained by using the computer vision technology. For details, refer to the description in the conventional technology. Details are not described herein again. When the label output by the label estimation module is a step size and a heading angle, IMU data of preset duration may be collected and input into the trajectory estimation model, and the label estimation module may directly output the step size and the heading angle. During training, a truth value step size and a truth value heading angle may be used as supervised quantities for supervised training. Details are not described in this embodiment of this application.

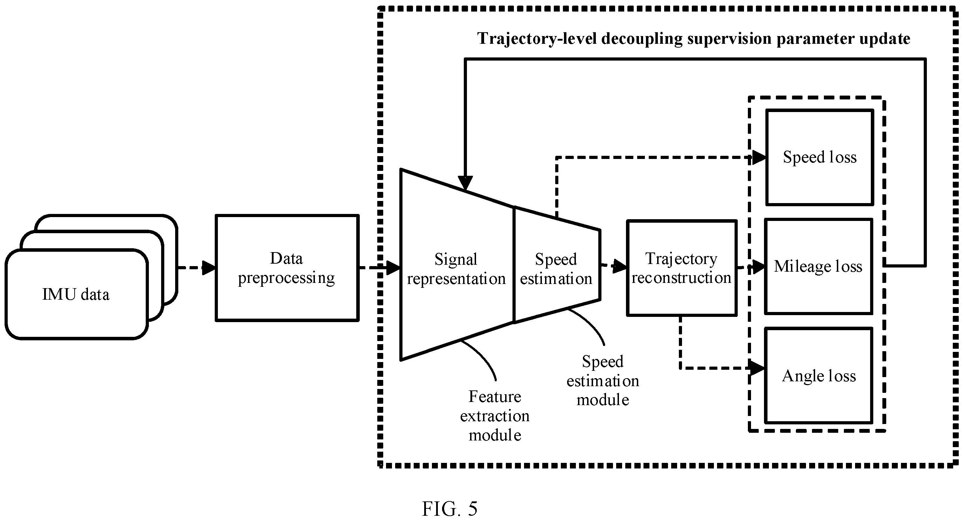

Next, refer to FIG. 5. An example of trajectory-level decoupling supervision is described. In the following description, an example in which a label output by the label estimation module is a speed is used for description.

As described above, IMU data in a time period t1 may be used as an independent data point to estimate or predict a speed of the time period t1. It may be set that the IMU data in the time period t1 is generated by an inertial measurement unit carried by an object A, and the estimated or predicted speed in the time period t1 is a speed of the object A in the time period t1. The trajectory estimation model may obtain the IMU data of the time period t1, and determine an estimated speed of the time period t1 based on the IMU data of the time period t1. The estimated speed of the time period t1 is multiplied by duration of the time period t1, to obtain an estimated trajectory of the time period t1. An estimated trajectory of another time period may be obtained by referring to the estimated trajectory of the time period t1. Estimating trajectories of a plurality of successively adjacent time periods are sequentially connected based on a sequence of the plurality of time periods in a time dimension, so that a trajectory of the object A in the plurality of time periods can be reconstructed. It may be set that the plurality of time periods are obtained by dividing a time period T 1. In this case, the reconstructed trajectory of the object A in the plurality of time periods is a trajectory of the object A in the time period T1. For ease of description, a trajectory obtained by reconstructing a plurality of estimated trajectories may be referred to as the reconstructed trajectory. A process of reconstructing a trajectory obtained by using a plurality of estimated trajectories may be referred to as trajectory reconstruction. A time period in a plurality of time periods may be referred to as a window, and IMU data of the time period is referred to as window IMU data.

Back to FIG. 5, IMU data of a plurality of windows of the object A may be obtained, where the IMU data of each window includes IMU data that is read a plurality of times from the inertial measurement unit carried by the object A in a corresponding window. For details, refer to the foregoing description of the IMU data in the time period t1, and details are not described herein again.

The IMU data of the plurality of windows of the object A may be input into the trajectory estimation model, and then the trajectory estimation model outputs speeds of the plurality of windows. The IMU data of the plurality of windows is in a one-to-one correspondence with the speeds of the plurality of windows. That is, the trajectory estimation model may calculate the speed of each window based on the IMU data of each of the plurality of windows. Specifically, a feature of the IMU data of each window may be extracted in the feature extraction module of the trajectory estimation model, and then the speed of each window is calculated in the label estimation module based on the feature of the IMU data of each window. For details, refer to the foregoing description of the embodiment shown in FIG. 3. Details are not described herein again.

In some embodiments, refer to FIG. 5. Data preprocessing is performed before the IMU data of the plurality of windows is input into the trajectory estimation model. For a specific data preprocessing process, refer to the foregoing description of the embodiment shown in FIG. 3. Details are not described herein again.

After the speed of each window is obtained, the speed of each window may be multiplied by the duration of the corresponding window, to obtain an estimated trajectory of the window. The estimated trajectories of the plurality of windows are reconstructed, to obtain reconstructed trajectories of the plurality of windows of the object A. The plurality of windows are obtained by dividing the time period T1, and the reconstructed trajectories of the plurality of windows of the object A are reconstructed trajectories of the time period T1 corresponding to the object A.

A truth value trajectory of the time period T1 corresponding to the object A may be obtained. The truth value trajectory may be a trajectory obtained by using a trajectory tracking technology in a lab environment. In one example, the truth value speed may be obtained by using a computer vision technology. For details, refer to descriptions in the conventional technology, and details are not described herein again.

After the truth value trajectory and the reconstructed trajectory of the time period T1 corresponding to the object A are obtained, the truth value trajectory and the reconstructed trajectory of the time period T1 corresponding to the object A may be compared, to obtain a trajectory difference between the truth value trajectory and the reconstructed trajectory. A difference between one trajectory and another trajectory may be referred to as a trajectory difference. Then, the parameter of the estimation speed model is updated by using the trajectory difference as a loss function, to implement trajectory-level supervised training. Specifically, the parameters of the feature extraction module and the label estimation module in the estimation speed model are updated to reduce the trajectory difference.

It may be understood that the trajectory may include a length and a direction of the trajectory. The direction of the trajectory may be an angle to which the trajectory points. The length of the trajectory may also be referred to as a mileage. In this embodiment of this application, the direction of the trajectory may be referred to as a heading angle of the trajectory.

In some embodiments, the comparing the truth value trajectory with the reconstructed trajectory of the time period T1 corresponding to the object A may specifically include: comparing a length of the truth value trajectory with a length of the reconstructed trajectory of the time period T1. The length of the reconstructed trajectory of the time period T1 is equal to a sum of lengths of estimated trajectories of all windows in the time period T1. The length of a truth value trajectory of the time period T1 is a total mileage of movement of the object A in the time period T1. The mileage difference is obtained by comparing the length of the truth value trajectory and the length of the reconstructed trajectory of the time period T1. The parameters of the feature extraction module and the label estimation module in the estimation speed model may be updated to reduce the mileage difference.

In some embodiments, the comparing the truth value trajectory with the reconstructed trajectory of the time period T1 corresponding to the object A may specifically include: comparing a heading angle of the truth value trajectory with a heading angle of the reconstructed trajectory of the time period T1, to obtain a heading angle difference. In an example, for any window in the time period T1, a heading angle of an estimated trajectory corresponding to the window may be compared with a heading angle of a truth value trajectory corresponding to the window, to obtain a heading angle difference of the window. Heading angle differences of one or more windows in the time period T1 may be added, to obtain a total heading angle difference. The parameters of the feature extraction module and the label estimation module in the estimation speed model may be updated to reduce the total heading angle difference.

In some embodiments, the comparing the truth value trajectory with the reconstructed trajectory of the time period T1 corresponding to the object A may specifically include: comparing a truth value speed with an estimated speed of the time period T 1, to obtain a speed difference. In an example, for any window in the time period T1, an estimated speed corresponding to the window may be compared with a truth value speed corresponding to the window, to obtain a speed difference of the window. Speed differences of one or more windows in the time period T1 may be added to obtain a total speed difference. The parameters of the feature extraction module and the label estimation module in the estimation speed model may be updated to reduce the total speed difference.

According to the foregoing solution, trajectory-level supervised training of the trajectory estimation model can be implemented, and a trajectory estimation model with higher precision can be trained.

The foregoing describes the training solution of the trajectory estimation model. Next, a solution of performing trajectory estimation by using the trajectory estimation model is described by using an example in which a trajectory of an object B is estimated. A process of performing trajectory estimation by using the trained trajectory estimation model may also be referred to as an inference process or an inference phase. To be distinguished from that in the training phase, IMU data used in the inference phase may be referred to as measured data.

The inference phase may be performed by a trajectory estimation apparatus. The trajectory estimation apparatus may be any device, platform, or cluster that has a computing and processing capability. In some embodiments, the trajectory estimation apparatus may be specifically a mobile phone, a tablet computer, a personal computer (personal computer, PC), an intelligent wearable device, an in-vehicle terminal, or the like.

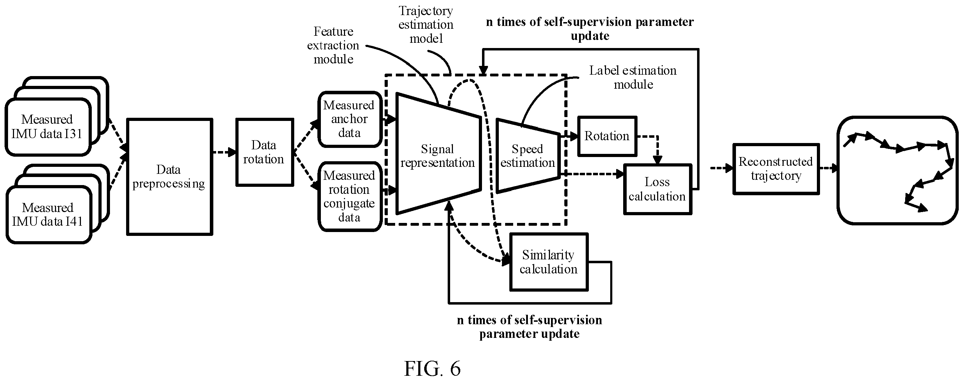

Refer to FIG. 6. Measured IMU data I31 of the object B may be obtained. The measured IMU data I31 includes IMU data read from an inertial measurement unit I3 carried by the object B in a time period T2. The time period T2 may be divided into a plurality of time periods t2. In other words, the time period T2 includes a plurality of consecutive time periods t2. IMU data is read from the inertial measurement unit I3 carried by the object B for a plurality of times in each time period t2, to obtain measured IMU data in the time period t2. For a manner of reading the IMU data from the inertial measurement unit I3, refer the foregoing description of the IMU data in the time period 11. Details are not described herein again.

The measured IMU data I31 may be input into a trajectory estimation model. The trajectory estimation model may output a speed in each time period t2. The speed is multiplied by the corresponding time period t2, to obtain an estimated trajectory in the time period t2. The speed output by the trajectory estimation model includes a size and a direction, that is, the speed includes a speed rate and a heading angle. Therefore, the estimated trajectory is a trajectory having a length and a heading angle. The estimated trajectories in the time periods t2 in the time period T2 are sequentially connected in a time sequence, to obtain a reconstructed trajectory in the time period T2. This can predict a trajectory of the object B in the time period T2.

In some embodiments, refer to FIG. 6. Before the measured IMU data I31 is input into the trajectory estimation model, data preprocessing may be performed on the measured IMU data I31. Specifically, data preprocessing is performed on data of each time period t2 in the measured IMU data I31. For a data preprocessing process of the time period t2, refer to the foregoing description of the data preprocessing process of the time period t1. Details are not described herein again.

In some embodiments, in the inference phase, self-supervision training may be performed on the trajectory estimation model again, so that the trajectory estimation model can better adapt to measured IMU data in a new gait. The following provides an example for description.

In some embodiments, in the inference phase, rotation equivariance self-supervision training may be performed on the trajectory estimation model again. Specifically, the measured IMU data in the time period t2 may be rotated to obtain measured rotation conjugate data in the time period t2. The measured IMU data and the measured rotation conjugate data in the time period t2 are input into the trajectory estimation model, so that the trajectory estimation model outputs a measured anchor speed based on the measured IMU data, and outputs a measured rotation conjugate speed based on the measured rotation conjugate data.

Parameters of layers in the trajectory estimation model may be updated by using a difference between the measured anchor speed and the measured rotation conjugate speed as a loss function. To be specific, to reduce the difference between the anchor speed and the measured rotation conjugate speed, the parameters of layers in the trajectory estimation model are updated.

In some embodiments, the difference between the measured anchor speed and the measured rotation conjugate speed is a difference between a measured anchor pseudo speed and the measured rotation conjugate speed. Specifically, it may be set that the measured rotation conjugate data is obtained by rotating the measured IMU data by an angle $\theta$ along a direction D1. In this case, the measured anchor speed may be rotated by the angle $\theta$ along the direction D1, to obtain the measured anchor pseudo speed. Then, the anchor pseudo speed and the measured rotation conjugate speed can be compared to calculate the difference between the anchor pseudo speed and the measured rotation conjugate speed. A parameter of a feature extraction module of the trajectory estimation model and a parameter of a speed extraction layer may be updated by using the difference between the measured anchor pseudo speed and the measured rotation conjugate speed as a loss function. That is, the parameter of the feature extraction module and the parameter of the speed extraction layer may be updated in a direction of reducing the difference between the measured anchor pseudo speed and the measured rotation conjugate speed, to perform rotation equivariance self-supervision training.

In some embodiments, the difference between the measured anchor speed and the measured rotation conjugate speed is a difference between the measured anchor speed and a measured rotation conjugate pseudo speed. Specifically, it may be set that the measured rotation conjugate data is obtained by rotating the measured IMU data by an angle $\theta$ along a direction D1. The measured rotation conjugate speed may be rotated by an angle $\theta$ along a direction D2, to obtain the measured rotation conjugate pseudo speed. The direction D2 is opposite to the direction D1. Then, the anchor speed and the measured rotation conjugate pseudo speed can be compared to calculate the difference between the anchor speed and the measured rotation conjugate pseudo speed. The parameter of the feature extraction module of the trajectory estimation model and the parameter of the speed extraction layer may be updated by using the difference between the anchor speed and the measured rotation conjugate pseudo speed as a loss function. That is, the parameter of the feature extraction module and the parameter of the speed extraction layer may be updated in a direction of reducing the difference between the anchor speed and the measured rotation conjugate pseudo speed. This implements rotation equivariance self-supervision training in the inference phase.

In some embodiments, in the inference phase, cross-device consistency self-supervision training may be performed on the trajectory estimation model. Measured IMU data I41 can be obtained. The measured IMU data I41 includes IMU data read from an inertial measurement unit I4 carried by the object B in a time period T2. The time period T2 may be divided into a plurality of time periods t2. The IMU data is read from the inertial measurement unit I4 carried by the object B for a plurality of times in each time period t2, to obtain measured IMU data I41 in the time period t2. For a manner of reading the IMU data from the inertial measurement unit I4, refer the foregoing description of the IMU data in the time period 11. Details are not described herein again. For ease of description, IMU data read from an inertial measurement unit I3 carried by the object B in the time period t2 is referred to as measured IMU data I31 in the time period t2. The measured IMU data I41 in the time period t2 is device conjugate data of the measured IMU data I31 in the time period t2.

The measured IMU data I31 and the measured IMU data I41 of each time period t2 in the time period T2 may be input to the feature extraction module of the trajectory estimation model, to perform signal representation, and obtain a feature of the measured IMU data I31 and a feature of the measured IMU data I41. For example, a similarity between the feature of the measured IMU data I31 and the feature of the measured IMU data I41 may be calculated, and then the parameter of the feature extraction module is updated in a direction of improving the similarity.

The feature extraction module may input the feature of the measured IMU data I31 and the feature of the measured IMU data I41 into the label estimation module. The label estimation module may calculate a speed I32 based on the feature of the measured IMU data I31, and calculate a speed I42 based on the feature of the measured IMU data I41. A difference between the speed I32 and the speed I42 may be calculated, and the parameter of the feature extraction module and the parameter of the speed extraction layer are updated by using the difference as a loss function. Specifically, to reduce the difference, the parameter of the feature extraction module and the parameter of the speed extraction layer are updated. This implements cross-device consistency self-supervision training in the inference phase.

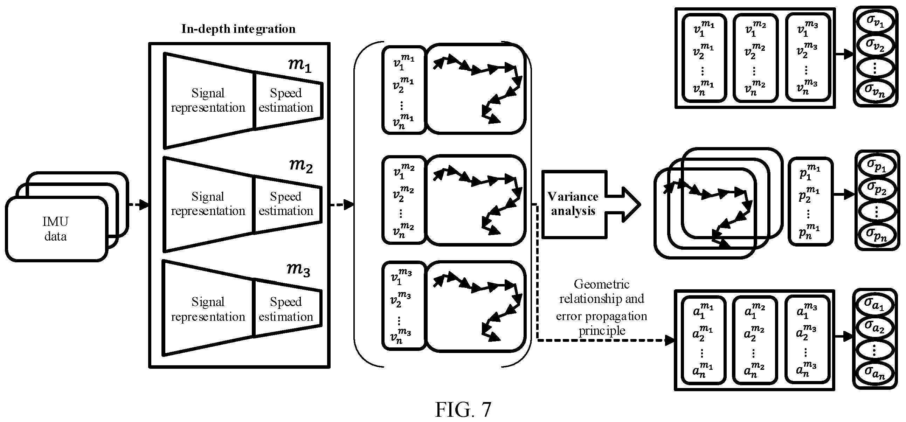

In some embodiments, a plurality of trajectory estimation models are separately and independently trained based on the training solution shown in FIG. 2. Then, the plurality of trajectory estimation models are used to separately calculate the measured IMU data, to obtain a plurality of estimated speeds. The plurality of estimated speeds are in a one-to-one correspondence with the plurality of trajectory estimation models. Refer to FIG. 7.

A trajectory estimation model $_{m1}$, a trajectory estimation model $_{m2}$, and a trajectory estimation model $_{m3}$ may be independently trained. The trajectory estimation model $_{m1}$ outputs a speed $v^{m1}$, the trajectory estimation model $_{m2}$ outputs a speed $v^{m2}$, and the trajectory estimation model $_{m3}$ outputs a speed $v^{m3}$. Differences between the speed $v^{m1}$, the speed $v^{m2}$, and the speed $v^{m3}$ may be calculated, to obtain a speed uncertainty $_1$. More specifically, as described above, the IMU data I31 includes IMU data in the plurality of time periods t2. As shown in FIG. 7, it may be set that the IMU data I31 includes the IMU data in n time periods t2. The speed $v^{m1}$, the speed $v^{m2}$, and the speed $v^{m3}$ may be obtained corresponding to each time period t2. A speed uncertainty of each time period t2 may be separately calculated.

It may be understood that an end of an estimated trajectory in each time period t2 represents a location of the object B at an end moment of the time period t2. For each time period t2, the plurality of estimated trajectories in the time period t2 may be obtained based on the plurality of speeds output by the plurality of trajectory estimation models. A difference between ends of the plurality of estimated trajectories in the time period t2 is calculated, to obtain a location uncertainty.

According to a geometric relationship and an error propagation principle (or an error propagation law), an uncertainty of a heading angle of trajectory estimation in each time period may be calculated.

It may be understood that, when the label output by the label estimation module is a displacement or a heading angle, with reference to the foregoing inference solution, the displacement or the heading angle may be estimated, thereby estimating the trajectory. Details are not described in this embodiment of this application.

According to the method for training the trajectory estimation model and the trajectory estimation method provided in this embodiment of this application, the trajectory estimation model can be trained in the self-supervision manner, so that estimation precision of the trajectory estimation model can be improved in a case of low data dependency. In addition, in the trajectory-level decoupling supervision manner, estimation precision of the trajectory length by the trajectory estimation model is improved, thereby avoiding a problem that the trajectory length is short. Further, in the inference phase, the trajectory estimation model can be updated, to improve estimation precision of the trajectory estimation model for unknown data (for example, data of a new gait), and improve generalization performance of the trajectory estimation model. In addition, a plurality of trajectory estimation models obtained through independent training are used to perform trajectory estimation, to obtain a plurality of estimated results of a physical quantity. A difference between the plurality of trajectory estimated results of the physical quantity is analyzed, and an uncertainty of the physical quantity is obtained as a trajectory estimation quality indicator, to provide an indication for availability of the trajectory estimated result. This helps implement highly reliable trajectory estimation.

Next, in a specific embodiment, the method for training the trajectory estimation model and the trajectory estimation method provided in embodiments of this application are described by using examples.

**Embodiment 1**

A solution in Embodiment 1 includes a training process. The training process includes two phases: a first phase, joint pre-training of self-supervision and speed supervision; and a second phase, trajectory-level decoupling supervision training. Self-supervision pre-training includes rotation equivariance self-supervision and cross-device consistency self-supervision. After a trajectory estimation model is initialized randomly, a pre-trained model can be obtained through rotation equivariance self-supervision and cross-device consistency self-supervision. After trajectory-level decoupling supervision is applied to the pre-training model, the model precision is further fine-tuned to improve. This is the second training process. The first phase of the training process includes five modules, and the second phase includes five modules. A rotation equivariance self-supervision module, a cross-device consistency self-supervision module, and a trajectory-level decoupling supervision module are core modules of the process.

A solution of joint pre-training of self-supervision and speed supervision is as follows.

The training process may include a data obtaining phase, where IMU data and truth value data are obtained in the data obtaining phase.

Specifically, the IMU data is read through an interface of IMU data of an inertial measurement unit in a readable terminal device. The IMU data includes data such as acceleration data monitored by an accelerometer and angular velocity data monitored by a gyroscope. A reading frequency is not lower than 100 Hz. A SLAM software module monitors relative location data of a corresponding trajectory at the same time to obtain truth value data, reads the truth value data monitored by SLAM at a frequency not less than 100 Hz, and uses the read truth value data as a supervised truth value. In this embodiment, 114 trajectories of 50 users in total are used as training verification data.

The training process may include a training data preparation phase. In the training data preparation phase, the training data is prepared.

The training data preparation phase may include steps such as data loading, data preprocessing, and data augmentation. Details are as follows.

Data loading: To meet a cross-device consistency training requirement, when training data is loaded, each time IMU data corresponding to a trajectory is loaded as IMU data of an anchor trajectory, a random piece of IMU data collected at the same time needs to be loaded as IMU data of a device conjugate trajectory. The two pieces of data share data of a truth value trajectory. The IMU data of the anchor trajectory, the IMU data of the device conjugate trajectory, and the data of the truth value trajectory form data of the training trajectory. The IMU data of the anchor trajectory and the IMU data of the device conjugate trajectory are respectively measured by different inertial measurement units carried on the same user.

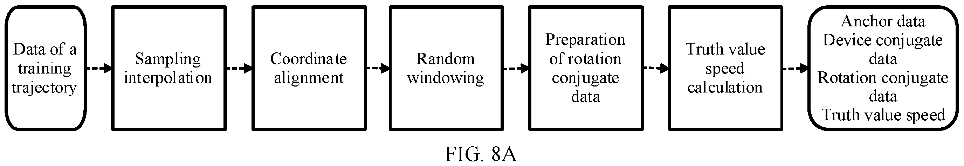

Refer to FIG. 8A. Data preprocessing includes sampling interpolation, coordinate alignment, random windowing, horizontal rotation, and truth value speed calculation.

Sampling interpolation: Perform linear interpolation upsampling on the IMU data of the anchor trajectory, the IMU data of the device conjugate trajectory, and the data of the truth value trajectory in all training data to 200 Hz, so that sampling equalization and time alignment are performed between IMU data read from different inertial measurement units.

Coordinate alignment: Calculate a gravity direction vector, where a gravity direction may be specifically calculated by using IMU data, and then a Z axis of the IMU data of the anchor trajectory and the IMU data of the device conjugate trajectory is rotated to align with the gravity direction.

Random windowing: For all training data, randomly select 128 segments of 1s IMU data from the IMU data of the anchor trajectory and the IMU data of the device conjugate trajectory as input data of a batch.

Preparation of rotation conjugate data: For IMU data extracted from the IMU data of the anchor trajectory, a random rotation angle $\theta$ on a horizontal plane, that is, an X axis-Y axis plane (as described above, the Z axis of the three-dimensional coordinate system is rotated to coincide with the gravity direction, and therefore the X axis-Y axis plane is a horizontal plane), is used to obtain the rotation conjugate data.

For ease of description, in the following, IMU data extracted from the IMU data of the anchor trajectory is referred to as anchor data, IMU data extracted from the IMU data of the device conjugate trajectory is referred to as device conjugate data, and data extracted from the data of the truth value trajectory is referred to as truth value data.

Truth value speed calculation: Calculate a displacement of a 1s time window in the truth value data to obtain the truth value speed, namely, a speed supervision value, which is used to supervise the speed of the anchor data in the corresponding 1s time window.

After data preprocessing, training data of one batch, that is, 128 data points, is obtained, and each data point is formed by anchor data with duration of 1s and a frequency of 200 Hz, the device conjugate data, the rotation conjugate data, and the truth value speed.

Data augmentation: The anchor data, the device conjugate data, the rotation conjugate data, and the truth value speed are rotated randomly on a horizontal plane, that is, an X axis-Y axis plane, by using the Z axis as a rotation axis, and are rotated by a same angle, to perform rotation data augmentation. Data augmentation can increase diversity of training data and improve generalization of the trained trajectory estimation model.

A speed estimation mode propagates forward.

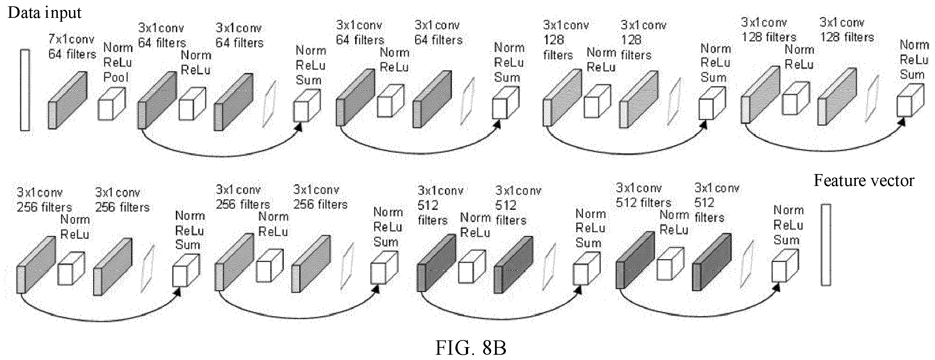

The trajectory estimation model includes a feature extraction module and a label estimation module. A network structure of the feature extraction module is formed by stacking a one-dimensional convolution (Conv1D) neural network, and a specific structure may be shown in FIG. 8B. This structure uses a residual network as a backbone (backbone), extracts the features of the IMU data through one-dimensional convolution, and can represent input IMU data as 512 7-dimensional vectors. A regularization (norm) layer in the structure shown in FIG. 8B may be implemented by using a group normalization operator.

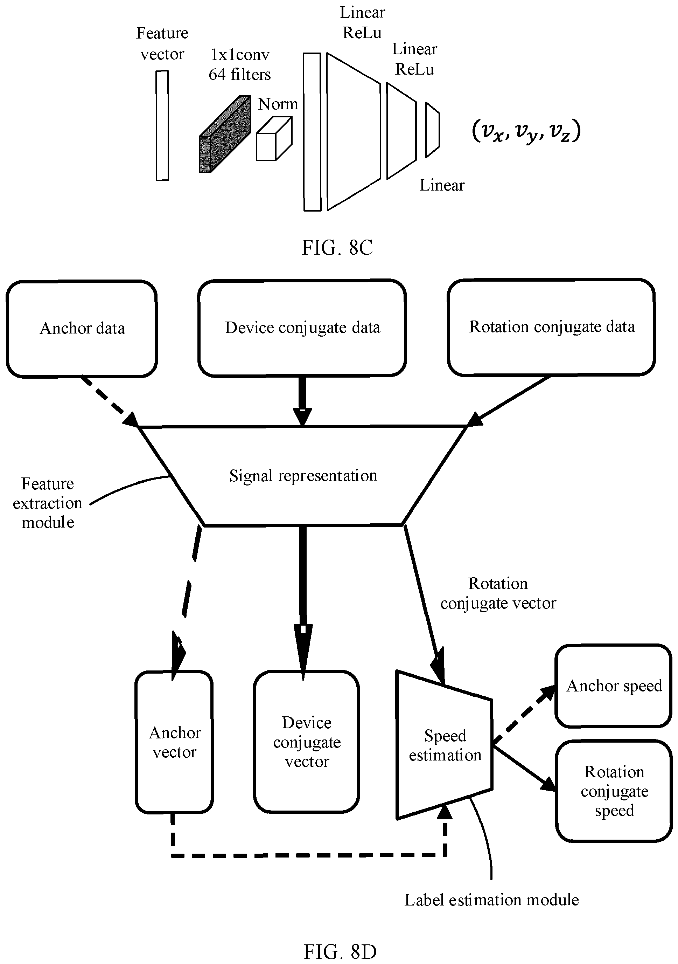

A network structure of the label estimation module includes the one-dimensional convolutional layer and a fully connected layer, which may be specifically shown in FIG. 8C. A speed regression estimation module includes one convolutional layer and three fully connected layers, where the fully connected layer may also be referred to as a linear layer (linear layer). The convolutional layer may convert 512 7-dimensional vectors output by the feature extraction module into 128 7-dimensional vectors. The three fully connected layers respectively regress feature vectors into a 512-dimensional vector, a 512-dimensional vector, and a 3-dimensional vector. The 3-dimensional vector is regression estimation of a speed, that is, the speed is represented by the 3-dimensional vector. As shown in FIG. 8C, the 3-dimensional vector is $(v_x, v_y, v_z)$.

As shown in FIG. 8D, anchor data, device conjugate data, and rotation conjugate data may be separately propagated by the feature extraction module, and a representation vector of the obtained anchor data is referred to as an anchor vector, a representation vector of the device conjugate data is referred to as a device conjugate vector, and a representation vector of the rotation conjugate data is referred to as a rotation conjugate vector. The anchor vector further passes through the label estimation module to obtain an anchor speed, and the rotation conjugate vector further passes through the label estimation module to obtain a rotation conjugate speed.

Calculation of a supervision function. The supervision function is also referred to as a loss function. In joint pre-training of self-supervision and speed supervision, the loss function is composed of three loss functions: a loss function of rotation equivariance self-supervision, a loss function of cross-device consistency self-supervision, and a loss function of truth value speed supervision.

The following separately describes the three loss functions.

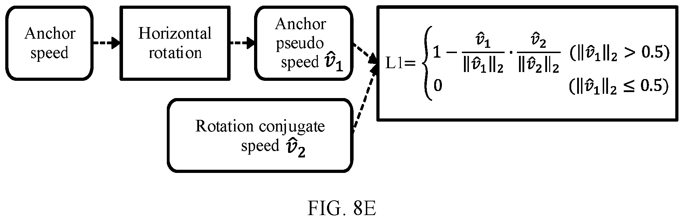

Calculation of a loss function of rotation equivariance self-supervision: According to rotation equivariance, an included angle between an anchor speed and a rotation conjugate speed that are obtained through propagation by using the trajectory estimation model should be a horizontal rotation angle θ used by a training data preparation module to prepare the rotation conjugate data. Refer to FIG. 8E. The anchor speed is horizontally rotated by the angle θ used by the training data preparation module, to obtain an anchor pseudo speed. If the trajectory estimation model has been converged to a high-precision trajectory estimation model, the anchor pseudo speed should be consistent with the rotation conjugate speed. It is considered that the trajectory estimation model is not converged in the pre-training process, only an angle limitation is considered during loss calculation. A signal-to-noise ratio of signal data of the inertial measurement unit is low and is insufficient for angle estimation at a low speed, especially an ultra-low speed, near stationary. Therefore, the angle error when the speed is lower than 0.5 m/s is not considered during loss calculation. Based on the foregoing content, the loss function L1 of rotation equivariance self-supervision is shown in FIG. 8E and formula (1). That is,

$$L1 = \begin{cases} 1 - \dfrac{\hat{v}_1}{\|\hat{v}_1\|_2} \cdot \dfrac{\hat{v}_2}{\|\hat{v}_2\|_2} & (\|\hat{v}_1\|_2 > 0.5) \\ 0 & (\|\hat{v}_1\|_2 \leq 0.5) \end{cases} \qquad \text{formula (1)}$$

$\hat{v}_1$ represents the anchor pseudo speed, and $\hat{v}_2$ represents the rotation conjugate speed.

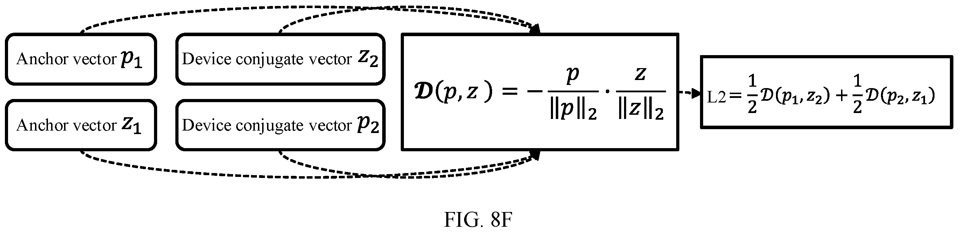

Calculation of a loss function of cross-device consistency self-supervision: According to cross-device consistency, the anchor vector and the device conjugate vector that are obtained through propagation of the trajectory estimation model are representation vectors of IMU data monitored by the inertial measurement unit corresponding to a same point speed on the trajectory, and should have a great similarity. When the anchor vector is considered as a prediction vector p, the device conjugate vector is fixed, and is considered as a vector z, so that a cosine similarity between the vector p and the vector z can be optimized. That is, the trajectory estimation model is optimized along a direction in which the vector p is close to the vector z, and vice versa. Based on the foregoing content, the loss function L2 of cross-device consistency self-supervision is shown in FIG. 8F and formula (2). That is,

$$L2 = \frac{1}{2}\mathcal{D}(p_1, z_2) + \frac{1}{2}\mathcal{D}(p_2, z_1) \quad \text{formula (2)}$$

$p_1$ represents an anchor vector used as the prediction vector, $z_2$ represents the fixed device conjugate vector, $p_2$ represents the device conjugate vector used as the prediction vector, and $z_1$ represents a fixed anchor vector.

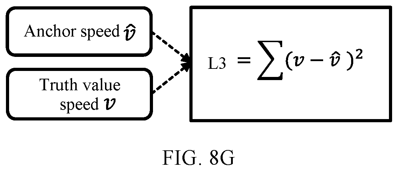

Calculation of a loss function of truth value speed supervision: Truth value speed supervision is supervision with a truth value label, and a difference between an estimated speed and a truth value speed may be directly used as the loss function L3, which may be specifically shown in FIG. 8G and formula (3).

$$L3 = \sum (v - \hat{v})^2 \quad \text{formula (3)}$$

$\hat{v}$ represents the estimated speed, and $v$ represents the truth value speed.

The loss function L1 of rotation equivariance self-supervision is multiplied by a weight 0.4, the loss function L3 of cross-device consistency self-supervision is multiplied by a weight 0.1, and the loss function L3 of truth value speed supervision is multiplied by a weight 0.5, and the obtained values are added to obtain a total loss L.

Trajectory estimation model training: Use backward propagation of the total loss L to optimize the trajectory estimation model. That is, the parameter in the trajectory estimation model is updated to reduce the total loss L. A learning rate is 1e-4. An Adam optimizer is used, and all training data is used for 400 rounds of optimization.

The first phase, namely, the joint pre-training phase of self-supervision and speed supervision, is described in the example above. Next, the second phase, namely, a trajectory-level decoupling supervision training phase, is described. A specific solution is as follows.

The trajectory-level decoupling supervision training phase also includes a data obtaining module. The data obtaining module is the same as the data obtaining module in the first phase, and may be configured to obtain IMU data and truth value data. For details, refer to the foregoing descriptions. Details are not described herein again.

The trajectory-level decoupling supervision training phase also includes a training data preparation module, configured to prepare training data. Similar to the training data preparation module in the first phase, the training data preparation module in the trajectory-level decoupling supervision training phase also performs steps such as data loading, data preprocessing, and data augmentation. Details are as follows.

Data loading: When the training data is loaded, IMU data of only one trajectory and the data of a corresponding truth value trajectory are loaded to form a training trajectory.

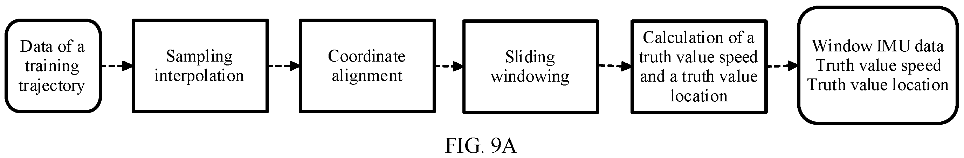

Refer o FIG. 9A. Data preprocessing includes sampling interpolation, coordinate alignment, sliding windowing, and calculation of a truth value speed and a truth value location. For a specific manner of performing interpolation and coordinate alignment, refer to the foregoing description in FIG. 8A. Details are not described herein again.

Sliding windowing: For all training data, 64 segments of IMU data with duration of 30s are randomly selected as input data. For the IMU data with the duration of 30s, sliding is performed by using duration of 1s as a time window and duration of 0.5s as a step size interval, to obtain 59 pieces of window IMU data with duration of 1s. The same sliding windowing operation may be performed on the truth value trajectory data to obtain 59 window truth value data with duration of 1s.

Truth value speed calculation: A displacement of a window truth value data within duration of 1s is calculated to obtain the truth value speed, namely, a speed supervision value, used to monitor the speed of the IMU data in the corresponding 1s time window. Coordinates (0, 0, 0) are used as initial coordinates of the trajectory, that is, the coordinates (0, 0, 0) are used as a start point of the trajectory. A relative location of a time point corresponding to an end of each time window may be obtained as the truth value location, namely, a location supervision value, used to monitor a relative location of the time point corresponding to the end of the corresponding 1s time window IMU data.

After data preprocessing, a batch of training data is obtained, that is, 64 data points are obtained. Each data point includes 59 pieces of window IMU data with duration of 1s and a frequency of 200 Hz, and 59 corresponding truth value speeds and truth value locations.

Forward propagation of the trajectory estimation model.

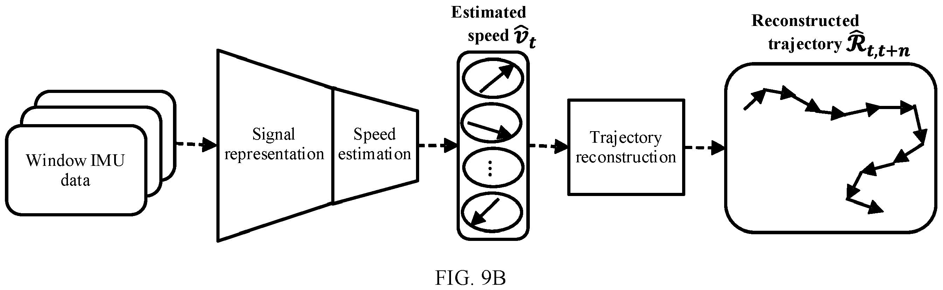

The trajectory estimation model in the trajectory-level decoupling supervision training phase is initialized to a trajectory estimation model obtained through joint pre-training of self-supervision and speed supervision. Refer to FIG. 9B. Continuous window IMU data is put into the trajectory estimation model to obtain a window estimated speed, and the window estimated speed is multiplied by window duration to obtain a window estimated trajectory. Then, the window estimated trajectories are further accumulated to obtain a reconstructed trajectory.

More specifically, a time period length corresponding to an estimated speed of a corresponding time window is calculated based on an interval between sliding windows, that is, a sliding step size, and is 0.5s in this embodiment. The speed estimated in each time window is multiplied by the time 0.5s to obtain a displacement corresponding to the time period, and a total displacement of the time period is obtained by accumulating the displacements of each time period. A location at each moment, that is, a trajectory with relative location coordinates, may be obtained by using (0, 0, 0) as an initial location and by accumulating the displacements of each time period.

It should be noted that, in this embodiment of this application, unless otherwise specified, the estimated trajectory may also be referred to as an estimated displacement. In other words, an estimated trajectory obtained by multiplying an estimated speed by corresponding duration is a displacement.

Calculation of a supervision function. The supervision function is also referred to as a loss function. In the trajectory-level decoupling supervision training, the loss function includes four loss functions: a loss function of total training mileage supervision, a loss function of step point heading angle supervision, and a loss function of truth value speed supervision. The speed supervision is consistent with the truth value speed supervision in the joint pre-training phase of self-supervision and speed supervision. The loss function of total trajectory mileage supervision and the loss function of step point heading angle supervision are described as follows.

Calculation of the loss function of total trajectory mileage supervision.

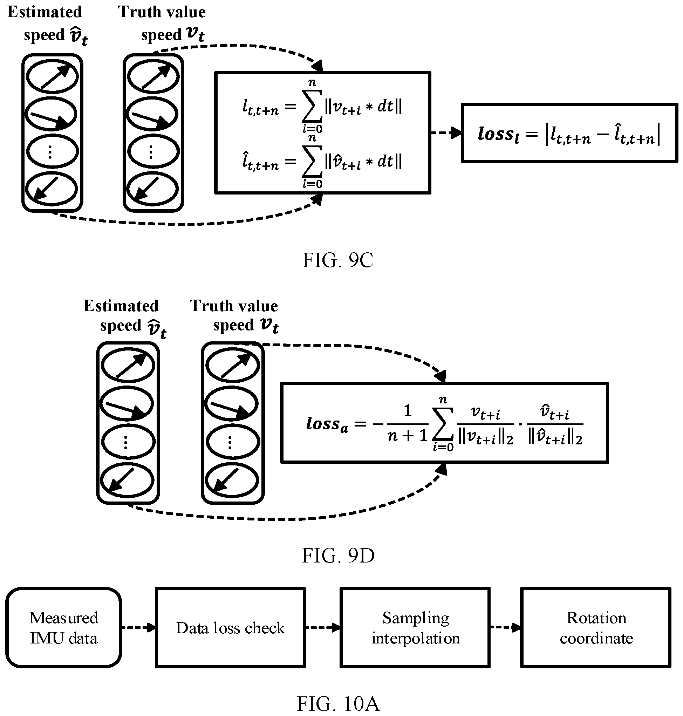

A total trajectory mileage is a total length of the trajectory. Refer to FIG. 9C, lengths of the estimated trajectories of the window may be accumulated to obtain an estimated total trajectory mileage. The window truth value trajectory obtained by multiplying the truth value speed by the corresponding window duration is accumulated to obtain a truth value total trajectory mileage. In FIG. 9C, $\hat{v}_t$ represents the estimated speed, $v_t$ represents the truth value speed, $\hat{v}_{t+i}$ represents an estimated speed in an $i^{th}$ time window, $v_{t+i}$ represents a truth value speed in the $i^{th}$ time window, n represents a quantity of time windows, $dt$ represents a time interval between time windows, $l_{t,t+n}$ represents the truth value total trajectory mileage, and $\hat{l}_{t,t+n}$ represents the estimated total trajectory mileage. An absolute value of the truth value total trajectory mileage minus the estimated total trajectory mileage is obtained to obtain an error of the total trajectory mileage, used as a loss function $loss_l$ of total trajectory mileage supervision. The function is specifically shown in formula (4).

$$loss_l = \left| l_{t,t+n} - \hat{l}_{t,t+n} \right| \quad \text{formula (4)}$$

Calculation of the loss function of step point heading angle supervision.

A step point is a trajectory of a time window. A cosine similarity between an estimated speed and a truth value speed in the same time window can be calculated, and a heading angle difference between the estimated speed and the truth value speed can be obtained based on the cosine similarity. The difference of the heading angle is inversely proportional to the cosine similarity. The differences of the heading angles corresponding to the time windows are accumulated, and use the sum as the loss function of step point heading angle supervision.

As shown in FIG. 9D, a cosine similarity is calculated based on an estimated speed output by a model and a truth value speed in training data, and is used as an angle error indicator. A total heading angle error in a corresponding time period is obtained through accumulation, and is used as the loss function $loss_a$ of step point heading angle supervision. The function is specifically shown in formula (5).

$$loss_a = -\frac{1}{n+1} \sum_{i=0}^{n} \frac{v_{t+i}}{\|v_{t+i}\|_2} \cdot \frac{\hat{v}_{t+i}}{\|\hat{v}_{t+i}\|_2} \quad \text{formula (5)}$$

For meanings of the letters in the formula (5), refer to the foregoing description of the formula (4). Details are not described herein again.

In the foregoing manner, the loss function $loss_l$ of total trajectory mileage supervision and a supervision function $loss_a$ of step point heading angle supervision may be obtained. The loss function $loss_l$ of total trajectory mileage supervision is multiplied by a weight 0.5, the supervision function $loss_a$ of step point heading angle supervision is multiplied by a weight 0.1, the loss function L3 of the truth value speed supervision is multiplied by a weight 0.5, and the obtained values are added to obtain a total loss l.

Backward propagation of the total loss l is used to optimize the trajectory estimation model. That is, the parameter in the trajectory estimation model is updated to reduce the total loss l.

The foregoing describes the training solution of the trajectory estimation model by using an example in Embodiment 1. Next, in another embodiment, a solution in which inference is performed by using the trajectory estimation model trained in Embodiment 1, that is, trajectory estimation, is described.

**Embodiment 2**

The inference process is described in Embodiment 2, and a specific solution is as follows.

The inference process may include a data obtaining phase, where measured IMU data is obtained in the data obtaining phase.

Specifically, the measured IMU data is read through an interface of IMU data of an inertial measurement unit in a readable terminal device. The measured IMU data includes data such as acceleration data monitored by an accelerometer in real time and angular velocity data monitored by a gyroscope in real time. A reading frequency is not lower than 100 Hz.

The inference process may include a data preprocessing phase. Refer to FIG. 10A. The data processing phase includes three steps: data loss check, sampling interpolation, and rotation coordinate.

Data loss check is specifically as follows: checking a time difference of adjacent sampling points in a time sequence signal, that is, the input measured IMU data. If a time difference between any two adjacent data points is greater than 50 ms, it indicates that data read from the inertial measurement unit is abnormal. In this case, the read IMU data is not used for trajectory estimation, and an exception is returned. Otherwise, the read measured IMU data is considered as IMU data that can be used for trajectory estimation.

Sampling interpolation is specifically as follows: in a given time window, performing upsampling on checked data of the measured IMU to 200 Hz by using linear interpolation, to ensure sampling equalization and time alignment between different asynchronous IMUs.

Rotation coordinate is specifically as follows: calculating a gravity direction vector, and rotating a coordinate axis of a coordinate system used by the measured IMU data to a Z axis to align with the gravity direction.

When IMU data of a plurality of inertial measurement units is read, the IMU data of the plurality of inertial measurement units may be preprocessed by using the same time window.

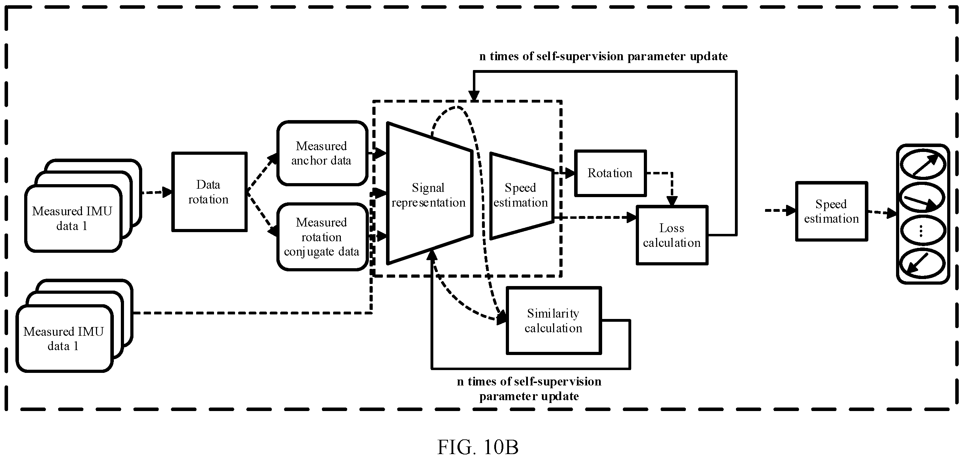

The inference process may include a training phase during inference. Refer to FIG. 10B. The training phase during inference may include steps such as data rotation, signal representation, speed estimation, speed rotation, model parameter update, and final speed estimation. A user may carry two different terminal devices, and measured IMU data 1 and measured IMU data 2 are respectively generated by the two different terminal devices. The measured IMU data 2 is measured device conjugate data of the measured IMU data 1.

The following separately describes the foregoing steps.

Data rotation is specifically as follows: The measured IMU data 1 is considered as measured anchor data. On an X axis-Y axis plane, four angles are randomly selected, 72°, 144°, 216°, and 288° are centers, and ±18° are a range, to rotate the measured anchor data on a horizontal plane (the X axis-Y axis plane), to obtain four groups of measured rotation conjugate data.

Signal representation is specifically as follows: The measured IMU data 1, the measured rotation conjugate data, and the measured IMU data 2 are separately placed into a feature extraction module of a trajectory estimation model, to obtain a feature vector of the measured IMU data 1, a feature vector of the measured rotation conjugate data, and a feature vector of the measured IMU data 2. The feature vector of the measured IMU data 1 and the feature vector of the measured IMU data 2 are used for similarity calculation, to perform cross-device consistency self-supervision training.

The speed estimation is specifically as follows: The feature vector of the measured IMU data 1 and the feature vector of the measured rotation conjugate data are separately input to a label estimation module for calculation, to obtain a measured anchor point estimated speed and a measured rotation conjugate estimated speed, which are used for rotation equivariance self-supervision training.

Speed rotation is specifically as follows: A measured anchor point is estimated to perform horizontal rotation at four angles in a data rotation step, to obtain four measured anchor pseudo speeds, which are used as speed supervision quantities based on rotation equivariance.

Loss calculation is specifically as follows: If an average speed of the measured anchor speed output by the trajectory estimation model is less than 0.8 m/s, loss calculation and model update are not performed. If an average speed of the measured anchor speed output by the trajectory estimation model is greater than 0.8 m/s, a loss function of rotation equivariance self-supervision training may be calculated as shown in FIG. 8E, and a loss function of cross-device consistency self-supervision training is calculated as shown in FIG. 8F. Then, the loss function of rotation equivariance self-supervision training is multiplied by a weight 0.8, the loss function of cross-device consistency self-supervision training is multiplied by 0.2, and then the values are added to obtain a total loss function of self-supervision.

Model parameter update is specifically updating a parameter of the trajectory estimation model based on the total loss function of self-supervision by using a learning rate 5e-5 and an Adam optimizer. The updated model is used to calculate the self-supervision loss function. The trajectory estimation model is updated once each time based on the data inferred by the trajectory estimation model.

According to the foregoing solution, self-update of the trajectory estimation model during inference can be implemented.

The measured IMU data 1 is input into a self-updated trajectory estimation model to perform speed estimation. Then, trajectory estimation may be performed. Details are as follows.

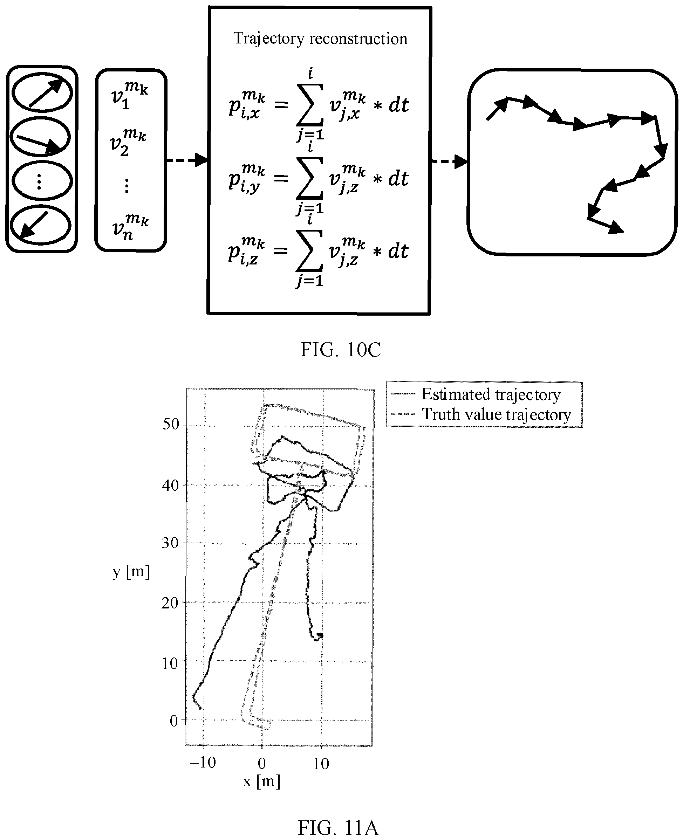

Refer to FIG. 10C. A time period length corresponding to an estimated speed of a time window is determined based on an interval between sliding windows, that is, a sliding step size, and is 0.1s in this embodiment. The estimated speed in each time window is multiplied by a time 0.1s to obtain an estimated trajectory corresponding to the time window, and estimated trajectories corresponding to each time window are accumulated to obtain a reconstructed trajectory. By using (0, 0, 0) as an initial location, and by accumulating the estimated trajectories corresponding to the time windows, a relative location corresponding to each time window may be obtained, to obtain a trajectory with relative location coordinates. For ease of description, an estimated trajectory corresponding to the time window is referred to as a step point. A relative location corresponding to each time window is referred to as an estimated location.

In FIG. 10C, i is a number of a location, j is a number of a step point and a number of a speed, x, y, and z are coordinates of a three-dimensional space coordinate system, $m_k$ is a number of a trajectory estimation model, dt is a sliding step size of a time window, v represents an estimated speed, and p represents an estimated location.

The foregoing example describes self-update and an inference process of the trajectory estimation model during inference. Self-update of the trajectory estimation model during inference may be referred to as self-update during inference. In addition, it should be noted that self-update during inference is an optional process, and is not a mandatory process. In other words, when the trajectory estimation model provided in this embodiment of this application is used to perform trajectory estimation, self-update during inference may be performed, or self-update when inference is performed may not be performed. In a case in which self-update is performed without inference, an estimated result with high precision can also be obtained.

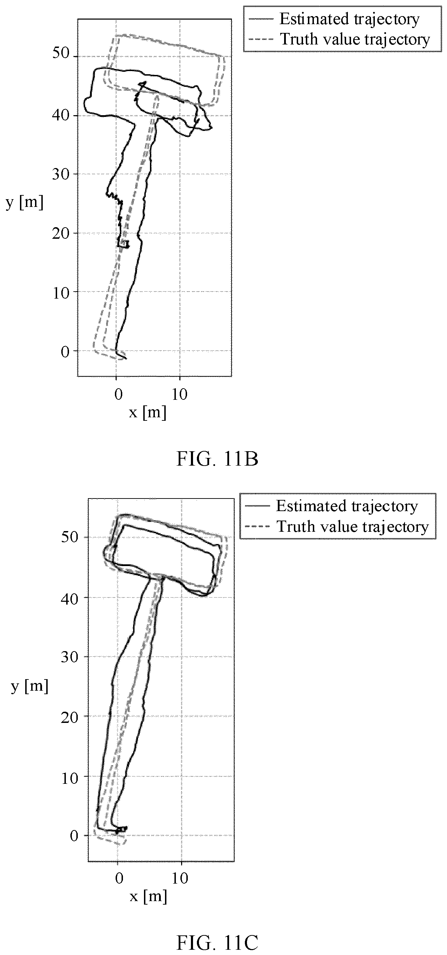

Refer to FIG. 11A and FIG. 11B. FIG. 11A is a schematic diagram of a result of trajectory estimation performed by using a hybrid gait trajectory test set C1 by using a solution A1. FIG. 11B is a schematic diagram of a result of performing trajectory estimation on the hybrid gait trajectory test set C1 by using a trajectory estimation model that is self-updated when no inference is performed according to an embodiment of this application. A hybrid gait trajectory means that the trajectory includes a plurality of gaits. It can be learned from FIG. 11A and FIG. 11B that, in the trajectory estimation model provided in this embodiment of this application, even if the trajectory estimation model is self-updated when inference is not performed, an estimated trajectory represented by a solid line is closer to a truth value trajectory represented by a dashed line, that is, trajectory estimation precision is higher.

According to the trajectory estimation model provided in this embodiment of this application, in a case in which self-update during inference is performed, precision of obtaining the estimated trajectory is further improved. Self-update during inference is performed on the trajectory estimation model provided in this embodiment of this application by using the hybrid gait trajectory test set C1. For details, refer to the foregoing descriptions. Details are not described herein again. A trajectory estimation model after self-update during inference is performed is obtained, and trajectory estimation is performed by using the hybrid gait trajectory test set C1. A result is shown in FIG. 11C. It can be learned that, compared with FIG. 11A and FIG. 11B, an estimated trajectory represented by a solid line in FIG. 11C is closer to a truth value trajectory represented by a dashed line. This indicates that precision of estimation is further improved in the case of performing self-update during inference. Specifically, when an average length of the trajectory corresponding to the test set is 190 m and corresponding average duration is 4 min, an absolute trajectory location error (absolute trajectory error) decreases from 8.39 m in the solution A1 to 4.94 m, and a relative trajectory location error (relative trajectory error) decreases from 7.40 m in the solution A1 to 4.65 m. A trajectory mileage error center is reduced from -4.43 m/100 m in solution A1 to -0.56 m/100 m.

A Euclidean distance between a location A1 on an estimated trajectory and a location B1 on a truth value trajectory is calculated, and the location A1 and the location B1 correspond to a same timestamp. An average value of Euclidean distances between location vectors corresponding to a plurality of timestamps is an absolute trajectory location error.

A trajectory is divided based on duration of 30 seconds, to obtain a plurality of sequentially connected segments. When a start point of a segment A2 of the estimated trajectory is aligned with a start point of a segment B2 of the truth value trajectory, a Euclidean distance between an end point of the segment A2 and an end point of the segment B2 is determined. The segment A2 and the segment B2 correspond to a same time period. An average value of Euclidean distances between end point location vectors corresponding to a plurality of time periods is a relative trajectory location error.

The trajectory mileage error center is an average value of differences between estimated mileage lengths of a plurality of trajectories and mileage lengths of truth value trajectories when a test set corresponds to the plurality of trajectories.

In conclusion, according to the trajectory estimation model training solution and the trajectory estimation solution provided in embodiments of this application, the trajectory estimation model may be trained in the self-supervision manner, so that estimation precision of the trajectory estimation model can be improved in a case of low data dependency. In addition, in the trajectory-level decoupling supervision manner, estimation precision of the trajectory length by the trajectory estimation model is improved, thereby avoiding a problem that the trajectory length is short. Further, in the inference phase, the trajectory estimation model may be updated, to improve estimation precision of the trajectory estimation model for unknown data (for example, data of a new gait), and improve generalization performance of the trajectory estimation model. In addition, a plurality of trajectory estimation models obtained through independent training are used to perform trajectory estimation, to obtain a plurality of estimated results of a physical quantity. A difference between the plurality of trajectory estimated results of the physical quantity is analyzed, and an uncertainty of the physical quantity is obtained as a trajectory estimation quality indicator, to provide an indication for availability of the trajectory estimated result. This helps implement highly reliable trajectory estimation.

An embodiment of this application further provides a trajectory uncertainty determining solution. The trajectory uncertainty determining solution may include a speed uncertainty determining solution, a location uncertainty determining solution, and a heading angle uncertainty determining solution.

The following describes the speed uncertainty determining solution, the location uncertainty determining solution, and the heading angle uncertainty determining solution.

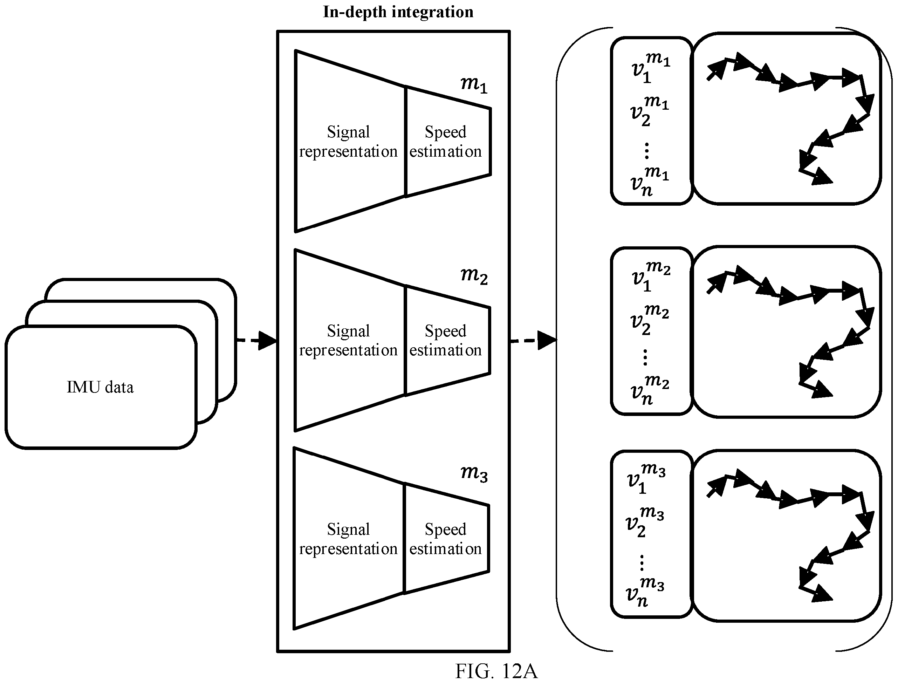

Refer to FIG. 12A. The training solution in Embodiment 1 may be used to independently train K speed estimation models, where K≥3. It may be set that K=3, and a trajectory estimation model $m_1$, a trajectory estimation model $m_2$, and a trajectory estimation model $m_3$ may be obtained through independent training. Training processes of the three trajectory estimation models are independent of each other. Therefore, the three trajectory models are different from each other. When the three models are used to estimate the same IMU data, a plurality of mutually independent estimated speeds may be obtained, and a plurality of mutually independent estimated locations may be obtained.

An estimated speed output by the trajectory estimation model $m_k$ is denoted as $(v_{x,k}, v_{y,k}, v_{z,k})$, and an average value $v_{x,mean}$ of the estimated speeds corresponding to the three trajectory estimation models in an X axis direction, an average value $v_{y,mean}$ of the estimated speeds in a Y axis direction, and an average value $v_{z,mean}$ of the estimated speeds in an Z axis direction are calculated by using the following formulas:

$$v_{x,mean} = \frac{1}{3} \sum_{k=1}^{3} v_{x,k} \quad \text{formula (6.1)}$$

$$v_{y,mean} = \frac{1}{3} \sum_{k=1}^{3} v_{y,k} \quad \text{formula (6.2)}$$

$$v_{z,mean} = \frac{1}{3} \sum_{k=1}^{3} v_{z,k} \quad \text{formula (6.3)}$$

In this case, a variance $\sigma_{v_x}^2$ of the estimated speeds corresponding to the three trajectory estimation models on the X axis, a variance $\sigma_{v_y}^2$ of the estimated speeds on the Y axis, and a variance $\sigma_{v_z}^2$ of the estimated speeds on the Z axis may be calculated by using the following formulas:

$$\sigma_{v_x}^2 = \frac{1}{3} \sum_{k=1}^{3} (v_{x,k} - v_{x,mean})^2 \quad \text{formula (7.1)}$$

$$\sigma_{v_y}^2 = \frac{1}{3} \sum_{k=1}^{3} (v_{y,k} - v_{y,mean})^2 \quad \text{formula (7.2)}$$

$$\sigma_{v_z}^2 = \frac{1}{3} \sum_{k=1}^{3} (v_{z,k} - v_{z,mean})^2 \quad \text{formula (7.3)}$$

Similarly, an estimated location further derived from the estimated speed of the trajectory estimation model is denoted as $(p_{x,k}, p_{y,k}, p_{z,k})$, and an average value $p_{x,mean}$ of estimated locations corresponding to the three trajectory estimation models on the X axis, an average value $p_{y,mean}$ of estimated locations on the Y axis, and an average value $p_{z,mean}$ of estimated locations on the Z axis may be calculated by using the following formulas:

$$p_{x,mean} = \frac{1}{3} \sum_{k=1}^{3} p_{x,k} \quad \text{formula (8.1)}$$

$$p_{y,mean} = \frac{1}{3} \sum_{k=1}^{3} p_{y,k} \quad \text{formula (8.2)}$$

$$p_{z,mean} = \frac{1}{3} \sum_{k=1}^{3} p_{z,k} \quad \text{formula (8.3)}$$

A variance of the estimated locations corresponding to the three trajectory estimation models on the X axis, a variance on the Y axis, and a variance on the Z axis may be calculated by using the following formulas:

$$\sigma_{p_x}^2 = \frac{1}{3} \sum_{k=1}^{3} (p_{x,k} - p_{x,mean})^2 \quad \text{formula (9.1)}$$

$$\sigma_{p_y}^2 = \frac{1}{3} \sum_{k=1}^{3} (p_{y,k} - p_{y,mean})^2 \quad \text{formula (9.2)}$$

$$\sigma_{p_z}^2 = \frac{1}{3} \sum_{k=1}^3 (p_{z,k} - p_{z,mean})^2 \ \ \text{formula (9.3)}$$

Similarly, an estimated step size derived from an estimated speed of the trajectory estimation model and a specific sampling time interval $\Delta t$ (namely, the sliding step size described above) is denoted as $l_k$. The estimated step size is an estimated trajectory length, and is a displacement length of a horizontal plane (namely, a plane defined by an X axis and a Y axis), and the estimated step size is denoted as $l_k$ calculated by using the following formula:

$$l_k = \Delta t * \sqrt{v_{x,k}^2 + v_{y,k}^2} \ \ \text{formula (10.1)}$$

An average value $l_{mean}$ of the estimated step sizes corresponding to the three trajectory estimation models is calculated by using the following formula:

$$l_{mean} = \frac{1}{3} \sum_{k=1}^3 l_k \ \ \text{formula (10.2)}$$

A variance $\sigma_l^2$ of the estimated step sizes corresponding to the three trajectory estimation models is calculated by using the following formula:

$$\sigma_l^2 = \frac{1}{3} \sum_{k=1}^3 (l_k - l_{mean})^2 \ \ \text{formula (10.3)}$$

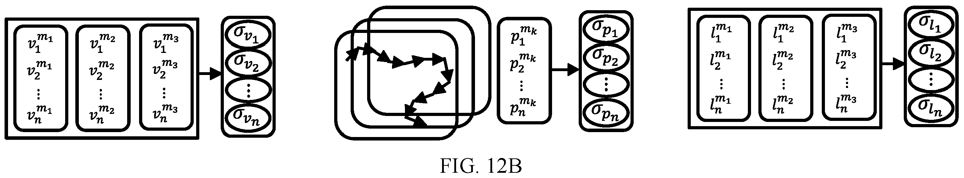

In this way, refer to FIG. 12B. A standard deviation between a plurality of mutually independent estimated speeds may be calculated as an uncertainty of the estimated speed. Alternatively, a standard deviation between a plurality of mutually independent estimated locations may be calculated as an uncertainty of the estimated location. Alternatively, a standard deviation between a plurality of mutually independent estimated step sizes may be calculated as an uncertainty of the estimated location. Further, uncertainties of several physical quantities may be deduced based on the uncertainty of the estimated speed and an error propagation principle. In this embodiment, a heading angle uncertainty on a plane is deduced only based on the geometric relationship.

It may be understood that the user may move at different speeds, for example, walking and stopping. For another example, the user sometimes walks fast, and sometimes walks slow. Experience shows that a large angle error is usually generated when a moving speed is slow. In particular, when the user is in a stationary state, the user may face any angle. In this case, it is difficult for the inertial measurement unit to capture the heading angle, and therefore, a large angle error may be generated when the user is in the stationary state or an approximate stationary state.

Based on the foregoing case, an embodiment of this application provides a solution for determining a heading angle uncertainty, to capture a large angle error generated when the user is in the stationary state or the approximate stationary state. Details are as follows.

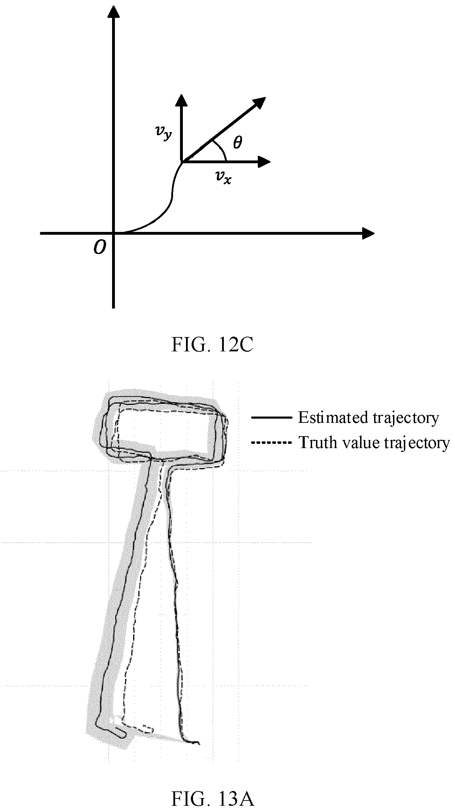

FIG. 12C shows a geometric relationship between a heading angle $\theta$, an estimated speed $v_x$ in an X axis direction, and an estimated speed $v_y$ in a Y axis direction. The heading angle $\theta$ is an angle on a horizontal plane (namely, a plane defined by an X axis and a Y axis). A variance $\sigma_{v_x}^2$ of the estimated speed $v_x$ in the X axis direction may be calculated by using the formula (7.1), and a variance $\sigma_{v_y}^2$ of the estimated speed $v_y$ in the Y axis direction may be calculated by using the formula (7.2).

According to the error propagation principle, the relationship between the variance of the heading angle $\theta$ and the variance $\sigma_{v_x}^2$ of the estimated speed $v_x$ in the X axis direction and the variance $\sigma_{v_y}^2$ of the estimated speed $\sigma_{v_y}^2$ in the Y axis direction can be obtained. By using the first-order partial and error relational expression, the variance $\sigma_\theta^2$ of the heading angle $\theta$ can be calculated as uncertainty estimation of the heading angle $\theta$. A specific process may be as follows:

First, according to a geometric relationship, the heading angle $\theta$ may be calculated according to an estimated speed $v_x$ in the X axis direction and an estimated speed $v_y$ in the Y axis direction, which is specifically shown in the formula (10).

$$\theta = \tan^{-1}\frac{v_y}{v_x} \quad \text{formula (11)}$$

According to the formula (11), a first-order partial derivative is calculated for $v_x$ of the heading angle $\theta$, to obtain a change rate $\frac{\partial \theta}{\partial v_x}$ of the heading angle $\theta$ in terms of speed $v_x$.

Specifically, $\frac{\partial \theta}{\partial v_x}$ may be obtained through calculation by using formula (12).

$$\frac{\partial \theta}{\partial v_x} = -\frac{v_y}{1+\left(\frac{v_y}{v_x}\right)^2} * \frac{1}{v_x^2} \quad \text{formula (12)}$$

Obtaining the change rate $\frac{\partial \theta}{\partial v_x}$ of the heading angle $\theta$ in terms of the speed $v_x$ specifically means that the heading angle changes by $-\frac{v_y}{1+\left(\frac{v_y}{v_x}\right)^2} * \frac{1}{v_x^2}$ unit angles each time a unit speed changes by $v_x$. For example, a unit speed may be 1 m/s, and a unit angle may be 1 rad.

According to the formula (11), a first-order partial derivative is calculated for $v_y$ of the heading angle $\theta$, to obtain a change rate $\frac{\partial \theta}{\partial v_y}$ of the heading angle $\theta$ in terms of the speed $v_y$. Specifically, $\frac{\partial \theta}{\partial v_y}$ may be obtained through calculation by using formula (13).

$$\frac{\partial \theta}{\partial v_y} = \frac{1}{1+\left(\frac{v_y}{v_x}\right)^2} * \frac{1}{v_x} \quad \text{formula (13)}$$

The change rate $\frac{\partial \theta}{\partial v_y}$ of the heading angle $\theta$ on $v_y$ specifically means that the heading angle changes by $\frac{1}{1+\left(\frac{v_y}{v_x}\right)^2} * \frac{1}{v_x}$ unit angles each time a unit speed changes by $v_y$. For example, a unit speed may be 1 m/s, and a unit angle may be 1 rad.

According to the error propagation principle, the variance $\sigma_\theta^2$ of the heading angle $\theta$ may be calculated by using formula (14).

$$\sigma_\theta^2 = \left(\frac{\partial \theta}{\partial v_x}, \frac{\partial \theta}{\partial v_y}\right) \begin{pmatrix} \sigma_{v_x}^2 & 0 \\ 0 & \sigma_{v_y}^2 \end{pmatrix} \begin{pmatrix} \frac{\partial \theta}{\partial v_x} \\ \frac{\partial \theta}{\partial v_y} \end{pmatrix} \quad \text{formula (14)}$$

Formula (15) may be obtained by adding the formula (12) and the formula (13) to the formula (14).

$$\sigma_\theta^2 = \frac{\frac{v_y^2}{v_x^4}\sigma_{v_x}^2 + \frac{1}{v_x^2}\sigma_{v_y}^2}{\left(1+\left(\frac{v_y}{v_x}\right)^2\right)^2} \quad \text{formula (15)}$$

By using the formula (15), an error of a heading angle $\sigma_\theta^2$ may be calculated by using a variance $\sigma_{v_x}^2$ of the estimated speed $v_x$ in the X axis direction and a variance $\sigma_{v_y}^2$ of the estimated speed $v_y$ in the Y axis direction.

In the solution for determining the heading angle uncertainty provided in this embodiment of this application, first-order partial derivative calculation is performed on the relational expression (the formula (11)) between the heading angle and the velocity, to obtain a change rate (namely, the formula (12)) of the heading angle on $v_x$ and a change rate (namely, the formula (12)) of the heading angle on $v_y$. According to the change rate of the heading angle on $v_x$ and the change rate of the heading angle on $v_y$, and by using an error propagation principle (the formula 14), a linear relationship (namely, the formula (15)) between the uncertainty of the heading angle and the uncertainty of $v_x$ and the uncertainty of $v_y$ may be obtained. In this way, the uncertainty of $v_x$ and the uncertainty of $v_y$ are added to the formula (15), to obtain the uncertainty of the heading angle.

According to the solution for determining the heading angle uncertainty provided in this embodiment of this application, the large angle error generated when the user is in the stationary state or the approximate stationary state can be captured. Specifically, according to the formula (15), the heading angle uncertainty $\sigma_\theta^2$ is negatively correlated with the speed $v_x$. When the user is in the stationary state or the approximately stationary state, the speed $v_x$ is a very small value. Therefore, according to the formula (15), the heading angle uncertainty $\sigma_\theta^2$ is a large value, so that the large angle error generated when the user is in the stationary state or the approximate stationary state is captured.

According to the trajectory uncertainty estimation solution provided in this embodiment of this application, trajectory estimation is performed by using a plurality of trajectory estimation models obtained through independent training, and variances of a plurality of trajectory estimated results are analyzed, to obtain uncertainty of a plurality of physical quantities as a trajectory estimation quality indicator. This provides an indication for availability of the trajectory estimated result, and helps implement highly reliable trajectory estimation.

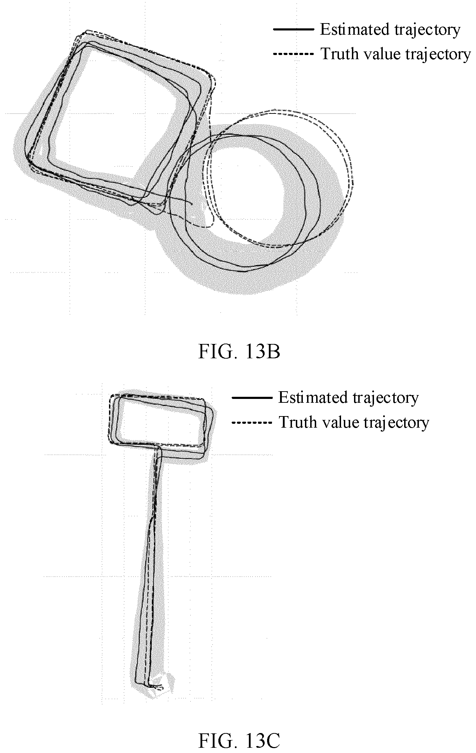

Refer to FIG. 13A, FIG. 13B, and FIG. 13C. A dashed line represents a truth value trajectory, a solid line represents an estimated trajectory, and a shadow represents an uncertainty. When the dashed line and the solid line are close to or even overlap, that is, when the truth value trajectory and the estimated trajectory are close to or even overlap, the shadow is narrow, that is, the uncertainty is low. When a difference between the dashed line and the solid line is large, that is, the difference between the truth value trajectory and the estimated trajectory is large, the shadow is wide, that is, the uncertainty is high. Therefore, the uncertainty determined in the trajectory uncertainty determining solution in this embodiment of this application may be used as a trajectory estimation quality indicator, to indicate availability of a trajectory estimated result.

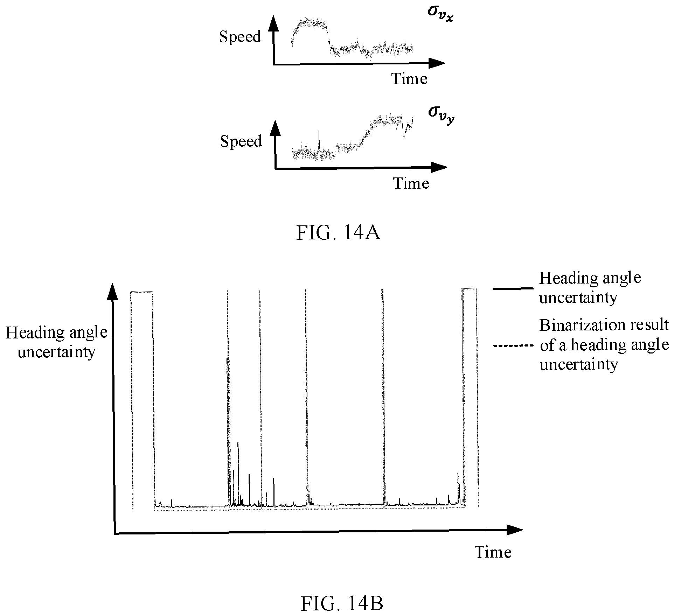

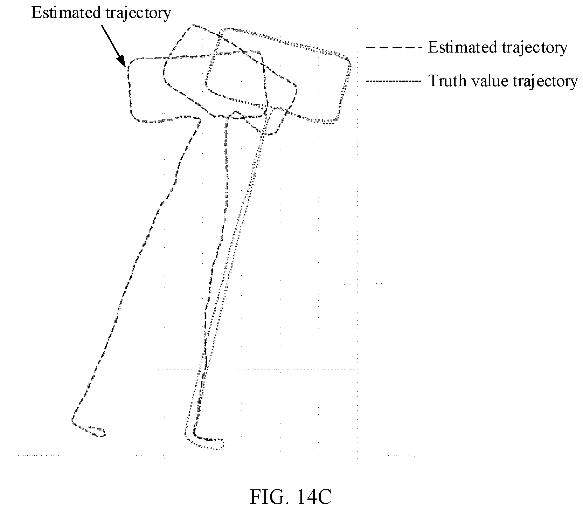

In addition, content shown in FIG. 14A, FIG. 14B, and FIG. 14C also indicates that the uncertainty determined in the trajectory uncertainty determining solution in this embodiment of this application may be used as the trajectory estimation quality indicator, to indicate availability of the trajectory estimated result.

FIG. 14A shows a speed uncertainty curve, where a horizontal coordinate is time, a vertical coordinate is a speed, and a shadow represents a speed uncertainty. According to the speed uncertainty and the speed shown in FIG. 14A, a heading angle uncertainty shown in FIG. 14B may be obtained.

In FIG. 14B, a solid line represents the heading angle uncertainty, and a dashed line represents a binarization result of the heading angle uncertainty. In FIG. 14B, a horizontal coordinate is time, and a vertical coordinate is the heading angle uncertainty. According to a binarization result of the heading angle uncertainty represented by the dashed line in FIG. 14B, it can be learned that at some moments, the heading angle uncertainty exceeds a preset threshold. The heading angle uncertainty that exceeds the preset threshold may be considered as a large heading angle uncertainty.

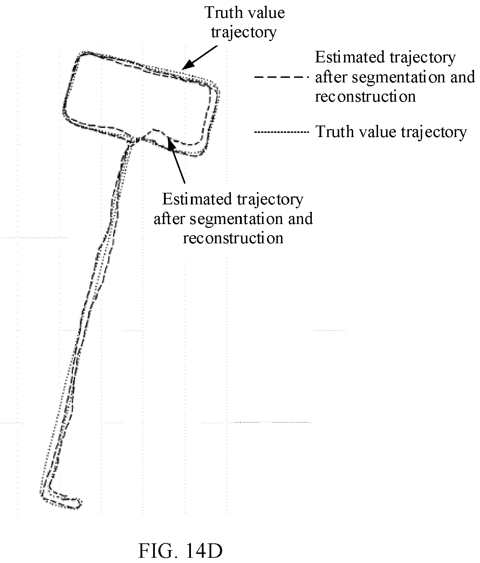

Refer to FIG. 14C and FIG. 14D. In a case in which the trajectory deviates from the truth value trajectory much, the estimated trajectory is segmented at a large degree of uncertainty of the heading angle, and the segmented trajectory is rotated and aligned with the truth value trajectory, to obtain an estimated trajectory after segmentation and reconstruction. It can be seen from FIG. 14D that the estimated trajectory after segmentation and reconstruction almost coincides with the truth value trajectory.

Therefore, the uncertainty determined in the trajectory uncertainty determining solution in this embodiment of this application may be used as a trajectory estimation quality indicator, to indicate availability of the trajectory estimated result.

The following describes, based on the trajectory model training solution described above, a method for training a trajectory estimation model provided in embodiments of this application. It may be understood that the training method to be described below is another expression manner of the trajectory model training solution described above, and the two are combined. For some or all of the method, refer to the foregoing description of the trajectory model training solution.

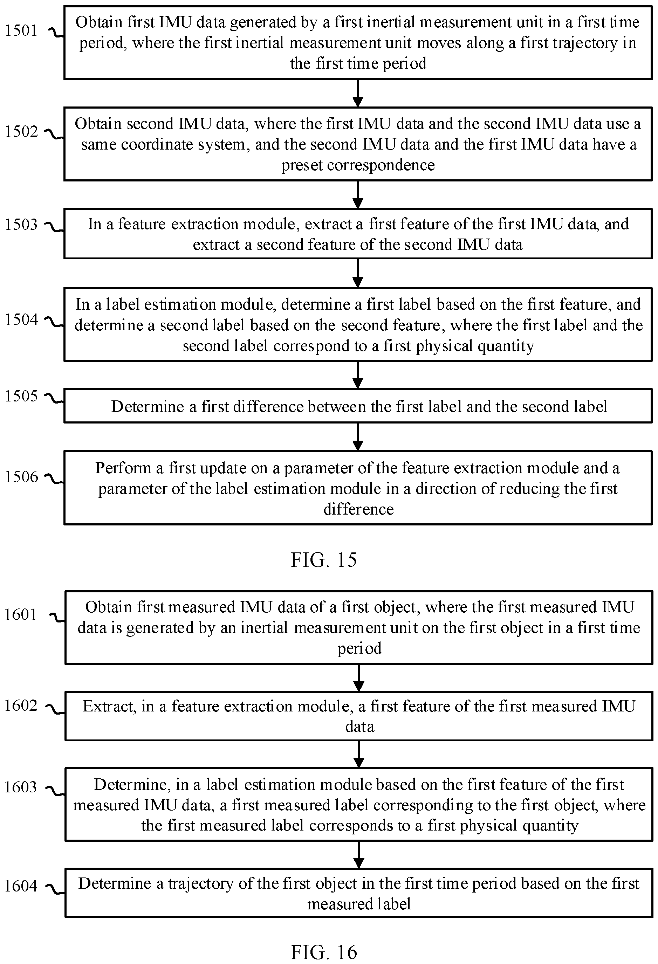

The trajectory estimation model includes a feature extraction module and a label estimation module. Refer to FIG. 15. The method for training the trajectory estimation model may include the following steps.

Step 1501: Obtain first IMU data generated by a first inertial measurement unit in a first time period, where the first inertial measurement unit moves along a first trajectory in the first time period. For details, refer to the foregoing description of the IMU data in the embodiment shown in FIG. 3 or the IMU data I11 in the embodiment shown in FIG. 4.

Step 1502: Obtain second IMU data, where the first IMU data and the second IMU data use a same coordinate system, and the second IMU data and the first IMU data have a preset correspondence. For details, refer to the foregoing description of the rotation conjugate data in the embodiment shown in FIG. 3 or the IMU data I21 in the embodiment shown in FIG. 4.

Step 1503: Extract, in the feature extraction module, a first feature of the first IMU data, and extract a second feature of the second IMU data. For details, refer to the foregoing description of the feature extraction module in the embodiment shown in FIG. 3 or FIG. 4.

Step 1504: Determine, in the label estimation module, a first label based on the first feature, and determine a second label based on the second feature, where the first label and the second label correspond to a first physical quantity. For details, refer to the foregoing description of the label estimation module in the embodiment shown in FIG. 3 or FIG. 4.

Step 1505: Determine a first difference between the first label and the second label. For details, refer to the foregoing description of the loss calculation process in the embodiment shown in FIG. 3 or FIG. 4.

Step 1506: Perform a first update on a parameter of the feature extraction module and a parameter of the label estimation module in a direction of reducing the first difference.

In some embodiments, the first physical quantity includes any one or more of a speed, a displacement, a step size, and a heading angle.

In some embodiments, the first IMU data includes a first acceleration and a first angular velocity, and the obtaining second IMU data includes: rotating a direction of the first acceleration by a first angle along a first direction, and rotating a direction of the first angular velocity by the first angle along the first direction, to obtain the second IMU data.

For details, refer to the foregoing description of the anchor data and the rotation conjugate data in the embodiment shown in FIG. 3.

In an illustrative example of these embodiments, the determining a first label based on the first feature, and determining a second label based on the second feature include: determining a first initial label based on the first feature, and rotating a direction of the first initial label by the first angle along the first direction to obtain the first label; and determining a second initial label based on the second feature, and rotating a direction of the second initial label by the first angle along a second direction to obtain the second label, where the second direction is opposite to the first direction.

For details, refer to the foregoing descriptions of the anchor pseudo speed and the rotation conjugate speed, and the anchor speed and the rotation conjugate pseudo speed in the embodiment shown in FIG. 3

In an illustrative example of these embodiments, the method further includes: obtaining device conjugate data of the first IMU data, where the device conjugate data is IMU data generated by a second inertial measurement unit in the first time period, and the second inertial measurement unit moves along the first trajectory in the first time period; extracting, in the feature extraction module, a feature of the device conjugate data; determining, in the label estimation module based on the feature of the device conjugate data, a label corresponding to the device conjugate data; and determining a device conjugate difference between the first label and the label corresponding to the device conjugate data; and the performing a first update on a parameter of the feature extraction module and a parameter of the label estimation module in a direction of reducing the first difference includes: performing the first update on the parameter of the feature extraction module and the parameter of the label estimation module in the direction of reducing the first difference and in a direction of reducing the device conjugate difference.

For details, refer to the foregoing description of the embodiment shown in FIG. 4.

In another illustrative example of these embodiments, the method further includes: obtaining device conjugate data of the first IMU data, where the device conjugate data is IMU data generated by a second inertial measurement unit in the first time period, and the second inertial measurement unit moves along the first trajectory in the first time period; extracting, in the feature extraction module, a feature of the device conjugate data; determining a conjugate feature similarity between the first feature and the feature of the device conjugate data; and performing a second update on the parameter of the feature extraction module in a direction of improving the conjugate feature similarity.

For details, refer to the foregoing description of the parameter update solution of the feature extraction module in the embodiment shown in FIG. 4.

In some embodiments, the second IMU data is generated by a second inertial measurement unit in the first time period, where the second inertial measurement unit moves along the first trajectory in the first time period.

For details, refer to the foregoing description of the embodiment shown in FIG. 4.

In an illustrative example of these embodiments, the first IMU data includes a first acceleration and a first angular velocity, and the method further includes: rotating a direction of the first acceleration by a first angle along a first direction, and rotating a direction of the first angular velocity by the first angle along the first direction, to obtain rotation conjugate IMU data of first IMU data; extracting, in the feature extraction module, a feature of the rotation conjugate IMU data; determining, in the label estimation module, a rotation conjugate label based on the feature of the rotation conjugate IMU data; and determining a rotation conjugate difference between the first label and the rotation conjugate label; and the performing a first update on a parameter of the feature extraction module and a parameter of the label estimation module in a direction of reducing the first difference includes: performing the first update on the parameter of the feature extraction module and the parameter of the label estimation module in the direction of reducing the first difference and in a direction of reducing the rotation conjugate difference.

In another illustrative example of these embodiments, the method further includes: determining a similarity between the first feature and the second feature; and performing a second update on the parameter of the feature extraction module in a direction of improving the similarity between the first feature and the second feature.

For details, refer to the foregoing description of the parameter update solution of the feature extraction module in the embodiment shown in FIG. 4.

In some embodiments, the method further includes: obtaining an actual label of the first inertial measurement unit when the first inertial measurement unit moves along the first trajectory; and determining a label difference between the first label and the actual label; and the performing a first update on a parameter of the feature extraction module and a parameter of the label estimation module in a direction of reducing the first difference includes: performing the first update on the parameter of the feature extraction module and the parameter of the label estimation module in the direction of reducing the first difference and in a direction of reducing the label difference.

For details, refer to the foregoing description of truth value speed supervision training.

In some embodiments, after the performing a first update on a parameter of the feature extraction module and a parameter of the label estimation module, the method further includes: extracting, in the feature extraction module after the first update, a third feature of the first IMU data; determining, in the label estimation module after the first update, a third label based on the third feature, where the third label includes an estimated speed; determining a first estimated trajectory of the first inertial measurement unit in the first time period based on duration of the first time period and the third label; determining a trajectory difference between the first estimated trajectory and the first trajectory; and performing a third update on a parameter of the feature extraction module and a parameter of the label estimation module in a direction of reducing the trajectory difference.

For details, refer to the foregoing description of the embodiment shown in FIG. 5.

In an illustrative example of these embodiments, the determining a trajectory difference between the first estimated trajectory and the first trajectory includes: determining a length difference between a length of the first estimated trajectory and a length of the first trajectory, and determining an angle difference between a heading angle of the first estimated trajectory and a heading angle of the first trajectory; and the performing a third update on a parameter of the feature extraction module and a parameter of the label estimation module in a direction of reducing the trajectory difference includes: performing the third update on the parameter of the feature extraction module and the parameter of the label estimation module in the direction of reducing the length difference and in a direction of reducing the angle difference.

For details, refer to the foregoing description of the trajectory-level decoupling supervision training in the embodiment shown in FIG. 5.

According to the method for training a trajectory estimation model provided in this embodiment of this application, the trajectory estimation model may be trained in the self-supervision manner, so that estimation precision of the trajectory estimation model can be improved in a case of low data dependency. In addition, in the trajectory-level decoupling supervision manner, estimation precision of the trajectory length by the trajectory estimation model is improved, thereby avoiding a problem that the trajectory length is short.

Based on the foregoing trajectory estimation solution, the following describes a trajectory estimation method by using a trajectory estimation model provided in an embodiment of this application. It may be understood that the method for performing trajectory estimation by using the trajectory estimation model that is to be described below is another expression manner of the trajectory estimation solution described above, and the two methods are combined. For some or all of the method, refer to the foregoing description of the trajectory estimation solution.

In the method for performing trajectory estimation by using the trajectory estimation model provided in this embodiment of this application, the trajectory estimation model may be obtained through training in the embodiment shown in FIG. 15. The trajectory estimation model includes a feature extraction module and a label estimation module. Refer to FIG. 16. The trajectory estimation method may include the following steps.

Step 1601: Obtain first measured IMU data of a first object, where the first measured IMU data is generated by an inertial measurement unit on the first object in a first time period. For details, refer to the foregoing description of the measured IMU data I31 in the embodiment shown in FIG. 6.

Step 1602: Extract, in the feature extraction module, a first feature of the first measured IMU data. For details, refer to the foregoing description of the feature extraction module in the embodiment shown in FIG. 6.

Step 1603: Determine, in the label estimation module based on the first feature of the first measured IMU data, a first measured label corresponding to the first object, where the first measured label corresponds to a first physical quantity. For details, refer to the foregoing description of the label estimation module in FIG. 6.

Step 1604: Determine a trajectory of the first object in the first time period based on the first measured label. For details, refer to the foregoing description of the trajectory reconstruction process in FIG. 6.

In some embodiments, the first physical quantity includes any one or more of a speed, a displacement, a step size, and a heading angle. In some embodiments, before the extracting a first feature of the first measured IMU data, the method further includes: obtaining second measured IMU data of the first object, where the first measured IMU data and the second measured IMU data use a same coordinate system, and the second measured IMU data and the first measured IMU data have a preset correspondence; extracting, in the feature extraction module, a second feature of the first measured IMU data, and extracting a feature of the second measured IMU data; determining, in the label estimation module, a second measured label based on the second feature of the first measured IMU data, and determining a third measured label based on the feature of the second measured IMU data, where the second measured label and the third measured label correspond to the first physical quantity, and the first physical quantity includes any one or more of a speed, a displacement, a step size, and a heading angle; determining a difference between the second measured label and the third measured label; and performing an update on a parameter of the feature extraction module and a parameter of the label estimation module in a direction of reducing a difference between the second measured label and the third measured label.

For details, refer to the foregoing description of the self-supervision parameter update process in the embodiment shown in FIG. 6.

In an illustrative example of these embodiments, the first measured IMU data includes a first measured acceleration and a first measured angular velocity, and the obtaining second measured IMU data of the first object includes: rotating a direction of the first measured acceleration by a first angle along a first direction, and rotating a direction of the first measured angular velocity by the first angle along the first direction, to obtain the second IMU data.

For details, refer to the foregoing description of the measured point data and the measured conjugate rotation data in the embodiment shown in FIG. 6.

In an illustrative example of these embodiments, the second measured IMU data and the first measured IMU data are respectively generated by different inertial measurement units on the first object in the first time period.

For details, refer to the foregoing description of the measured IMU data I41 in the embodiment shown in FIG. 6.

According to the trajectory estimation method provided in this embodiment of this application, the trajectory estimation model obtained through training in the embodiment shown in FIG. 15 is used to estimate a trajectory, to obtain an estimated trajectory with high precision. In addition, in the inference phase, the trajectory estimation model may be updated, to improve estimation precision of the trajectory estimation model for strange data (for example, data of a new gait), and improve generalization performance of the trajectory estimation model.

The following describes, based on the trajectory uncertainty determining solution described above, a trajectory uncertainty determining method provided in embodiments of this application. It may be understood that the trajectory uncertainty determining method that is to be described below is another expression manner of the trajectory uncertainty determining solution described above, and the methods two are combined. For some or all content of the method, refer to the foregoing description of the trajectory uncertainty determining solution.

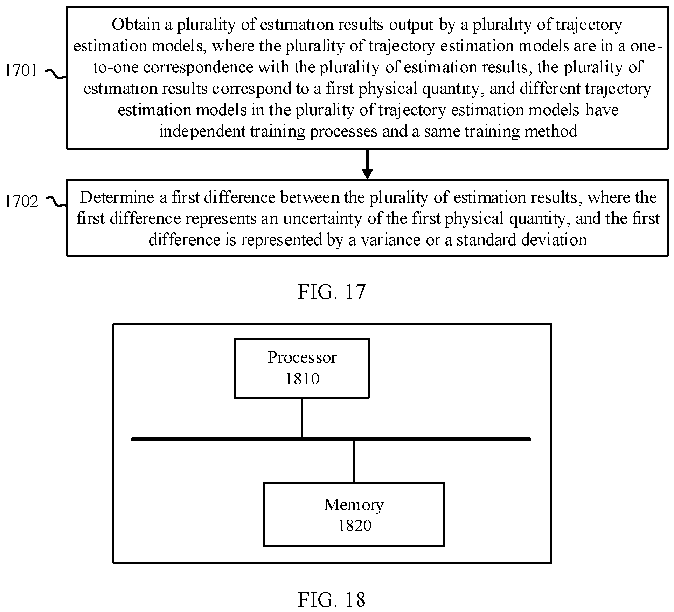

Refer to FIG. 17. The method includes the following steps.

Step 1701: Obtain a plurality of estimated results output by a plurality of trajectory estimation models, where the plurality of trajectory estimation models are in a one-to-one correspondence with the plurality of estimated results, the plurality of estimated results correspond to a first physical quantity, training processes of different trajectory estimation models in the plurality of trajectory estimation models are independent of each other, and training methods are the same. For details, refer to the foregoing description of the embodiment shown in FIG. 12A.

Step 1702: Determine a first difference between the plurality of estimated results, where the first difference represents an uncertainty of the first physical quantity, and the first difference is represented by a variance or a standard deviation. For details, refer to the foregoing description of the embodiment shown in FIG. 12B.

In some embodiments, the first physical quantity is a speed. For details, refer to the foregoing descriptions of the formula (6.1) to the formula (7.3).

In some embodiments, the method further includes: determining a first location corresponding to the estimated result; and determining a second difference between a plurality of first locations corresponding to the plurality of estimated results, where the plurality of first locations are in a one-to-one correspondence with the plurality of estimated results, the second difference represents an uncertainty of the first location, and the second difference is represented by using a variance or a standard deviation. For details, refer to the foregoing descriptions of the formula (8.1) to the formula (9.3).

In some embodiments, the estimated result is represented by using a three-dimensional space coordinate system, and the estimated result includes a first speed in a direction of a first coordinate axis of the three-dimensional space coordinate system and a second speed in a direction of a second coordinate axis of the three-dimensional space coordinate system; and the method further includes: determining a first change rate of a first heading angle at the first speed, and determining a second change rate of the first heading angle at the second speed, where the first heading angle is an angle on a plane on which the first coordinate axis and the second coordinate axis are located; and determining an uncertainty of the first heading angle based on the first change rate, the second change rate, an uncertainty of the first speed, and an uncertainty of the second speed.

For details, refer to the foregoing descriptions of the embodiment shown in FIG. 12C, the formula (14), and the formula (15).

In an illustrative example of these embodiments, the determining a first change rate of a first heading angle at the first speed, and determining a change rate of the first heading angle at the second speed includes: obtaining a first expression by using the first speed and the second speed that represent a first heading angle; performing first-order partial derivative calculation of the first speed on the first expression, to obtain the first change rate; and performing first-order partial derivative calculation of the second speed on the first expression, to obtain the second change rate.

For details, refer to the foregoing descriptions of the embodiment shown in FIG. 12C and the formula (11) to the formula (13).

In the uncertainty estimation solution provided in this embodiment of this application, a plurality of trajectory estimation models obtained through independent training may be used to perform trajectory estimation, to obtain a plurality of estimated results of a physical quantity. A difference between the plurality of trajectory estimated results of the physical quantity is analyzed, and an uncertainty of the physical quantity is obtained as a trajectory estimation quality indicator, to provide an indication for availability of the trajectory estimated result. This helps implement highly reliable trajectory estimation.

An embodiment of this application further provides a computing device. Refer to FIG. 18. The computing device may include a processor 1810 and a memory 1820. The memory 1820 is configured to store computer instructions. The processor 1810 is configured to execute the computer instructions stored in the memory 1820, so that the computing device can perform the method embodiment shown in FIG. 15.

An embodiment of this application further provides a computing device. Still refer to FIG. 18. The computing device may include a processor 1810 and a memory 1820. The memory 1820 is configured to store computer instructions. The processor 1810 is configured to execute the computer instructions stored in the memory 1820, so that the computing device can perform the method embodiment shown in FIG. 16.

An embodiment of this application further provides a computing device. Still refer to FIG. 18. The computing device may include a processor 1810 and a memory 1820. The memory 1820 is configured to store computer instructions. The processor 1810 is configured to execute the computer instructions stored in the memory 1820, so that the computing device can perform the method embodiment shown in FIG. 17.

It may be understood that, the processor in embodiments of this application may be a central processing unit (central processing unit, CPU), the processor may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium in any other form well known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It may be understood that various numbers in embodiments of this application are merely used for differentiation for ease of description, and are not used to limit the scope of embodiments of this application.

**Claims**

1. A method for training a trajectory estimation model, wherein the trajectory estimation model comprises a feature extraction module and a label estimation module, and the method comprises:

   obtaining first IMU data generated by a first inertial measurement unit in a first time period, wherein the first inertial measurement unit moves along a first trajectory in the first time period;
   obtaining second IMU data, wherein the first IMU data and the second IMU data use a same coordinate system, and the second IMU data and the first IMU data have a preset correspondence;
   extracting, in the feature extraction module, a first feature of the first IMU data, and extracting a second feature of the second IMU data;
   determining, in the label estimation module, a first label based on the first feature, and determining a second label based on the second feature, wherein the first label and the second label correspond to a first physical quantity;
   determining a first difference between the first label and the second label; and
   performing a first update on a parameter of the feature extraction module and a parameter of the label estimation module in a direction of reducing the first difference.

2. The method according to claim 1, wherein the first physical quantity comprises any one or more of a speed, a displacement, a step size, and a heading angle.

3. The method according to claim 1 or 2, wherein the first IMU data comprises a first acceleration and a first angular velocity, and the obtaining second IMU data comprises:
   rotating a direction of the first acceleration by a first angle along a first direction, and rotating a direction of the first angular velocity by the first angle along the first direction, to obtain the second IMU data.

4. The method according to claim 3, wherein the determining a first label based on the first feature, and determining a second label based on the second feature comprise:

   determining a first initial label based on the first feature, and rotating a direction of the first initial label by the first angle along the first direction to obtain the first label; and
   determining a second initial label based on the second feature, and rotating a direction of the second initial label by the first angle along a second direction to obtain the second label, wherein the second direction is opposite to the first direction.

5. The method according to claim 3, wherein
   the method further comprises:

   obtaining device conjugate data of the first IMU data, wherein the device conjugate data is IMU data generated by a second inertial measurement unit in the first time period, and the second inertial measurement unit moves along the first trajectory in the first time period;
   extracting, in the feature extraction module, a feature of the device conjugate data;
   determining, in the label estimation module based on the feature of the device conjugate data, a label corresponding to the device conjugate data; and
   determining a device conjugate difference between the first label and the label corresponding to the device conjugate data; and
   the performing a first update on a parameter of the feature extraction module and a parameter of the label estimation module in a direction of reducing the first difference comprises:
   performing the first update on the parameter of the feature extraction module and the parameter of the label estimation module in the direction of reducing the first difference and in a direction of reducing the device conjugate difference.

6.  The method according to claim 3, wherein the method further comprises:

    obtaining device conjugate data of the first IMU data, wherein the device conjugate data is IMU data generated by a second inertial measurement unit in the first time period, and the second inertial measurement unit moves along the first trajectory in the first time period;
    extracting, in the feature extraction module, a feature of the device conjugate data;
    determining a conjugate feature similarity between the first feature and the feature of the device conjugate data; and
    performing a second update on the parameter of the feature extraction module in a direction of improving the conjugate feature similarity.

7.  The method according to claim 1 or 2, wherein the second IMU data is generated by a second inertial measurement unit in the first time period, and the second inertial measurement unit moves along the first trajectory in the first time period.

8.  The method according to claim 7, wherein the first IMU data comprises a first acceleration and a first angular velocity, and the method further comprises:

    rotating a direction of the first acceleration by a first angle along a first direction, and rotating a direction of the first angular velocity by the first angle along the first direction, to obtain rotation conjugate IMU data of first IMU data;
    extracting, in the feature extraction module, a feature of the rotation conjugate IMU data;
    determining, in the label estimation module, a rotation conjugate label based on the feature of the rotation conjugate IMU data; and
    determining a rotation conjugate difference between the first label and the rotation conjugate label; and
    the performing a first update on a parameter of the feature extraction module and a parameter of the label estimation module in a direction of reducing the first difference comprises:
    performing the first update on the parameter of the feature extraction module and the parameter of the label estimation module in the direction of reducing the first difference and in a direction of reducing the rotation conjugate difference.

9.  The method according to claim 7, wherein the method further comprises:

    determining a similarity between the first feature and the second feature; and
    performing a second update on the parameter of the feature extraction module in a direction of improving the similarity between the first feature and the second feature.

10. The method according to claim 1 or 2, wherein
    the method further comprises:

    obtaining an actual label of the first inertial measurement unit when the first inertial measurement unit moves along the first trajectory; and
    determining a label difference between the first label and the actual label; and
    the performing a first update on a parameter of the feature extraction module and a parameter of the label estimation module in a direction of reducing the first difference comprises:
    performing the first update on the parameter of the feature extraction module and the parameter of the label estimation module in the direction of reducing the first difference and in a direction of reducing the label difference.

11. The method according to claim 1, wherein after the performing a first update on a parameter of the feature extraction module and a parameter of the label estimation module, the method further comprises:

    extracting, in the feature extraction module after the first update, a third feature of the first IMU data;
    determining, in the label estimation module after the first update, a third label based on the third feature, wherein the third label comprises an estimated speed;
    determining a first estimated trajectory of the first inertial measurement unit in the first time period based on duration of the first time period and the third label;
    determining a trajectory difference between the first estimated trajectory and the first trajectory; and
    performing a third update on the parameter of the feature extraction module and the parameter of the label estimation module in a direction of reducing the trajectory difference.

12. The method according to claim 11, wherein the determining a trajectory difference between the first estimated trajectory and the first trajectory comprises:

determining a length difference between a length of the first estimated trajectory and a length of the first trajectory, and determining an angle difference between a heading angle of the first estimated trajectory and a heading angle of the first trajectory; and

the performing a third update on a parameter of the feature extraction module and a parameter of the label estimation module in a direction of reducing the trajectory difference comprises:

performing the third update on the parameter of the feature extraction module and the parameter of the label estimation module in a direction of reducing the length difference and in a direction of reducing the angle difference.

13. A method for performing trajectory estimation by using a trajectory estimation model, wherein the trajectory estimation model is obtained through training according to the method according to any one of claims 1 to 12, the trajectory estimation model comprises a feature extraction module and a label estimation module, and the method comprises:

obtaining first measured IMU data of a first object, wherein the first measured IMU data is generated by an inertial measurement unit on the first object in a first time period;

extracting, in the feature extraction module, a first feature of the first measured IMU data;

determining, in the label estimation module based on the first feature of the first measured IMU data, a first measured label corresponding to the first object, wherein the first measured label corresponds to a first physical quantity; and

determining a trajectory of the first object in the first time period based on the first measured label.

14. The method according to claim 13, wherein the first physical quantity comprises any one or more of a speed, a displacement, a step size, and a heading angle.

15. The method according to claim 13 or 14, wherein before the extracting a first feature of the first measured IMU data, the method further comprises:

obtaining second measured IMU data of the first object, wherein the first measured IMU data and the second measured IMU data use a same coordinate system, and the second measured IMU data and the first measured IMU data have a preset correspondence;

extracting, in the feature extraction module, a second feature of the first measured IMU data, and extracting a feature of the second measured IMU data;

determining, in the label estimation module, a second measured label based on the second feature of the first measured IMU data, and determining a third measured label based on the feature of the second measured IMU data, wherein the second measured label and the third measured label correspond to the first physical quantity;

determining a difference between the second measured label and the third measured label; and

performing an update on a parameter of the feature extraction module and a parameter of the label estimation module in a direction of reducing a difference between the second measured label and the third measured label.

16. The method according to claim 15, wherein the first measured IMU data comprises a first measured acceleration and a first measured angular velocity, and the obtaining second measured IMU data of the first object comprises: rotating a direction of the first measured acceleration by a first angle along a first direction, and rotating a direction of the first measured angular velocity by the first angle along the first direction, to obtain the second IMU data.

17. The method according to claim 15, wherein the second measured IMU data and the first measured IMU data are respectively generated by different inertial measurement units on the first object in the first time period.

18. A trajectory uncertainty determining method, comprising:

obtaining a plurality of estimated results output by a plurality of trajectory estimation models, wherein the plurality of trajectory estimation models are in a one-to-one correspondence with the plurality of estimated results, the plurality of estimated results correspond to a first physical quantity, training processes of different trajectory estimation models in the plurality of trajectory estimation models are independent of each other, and training methods are the same; and

determining a first difference between the plurality of estimated results, wherein the first difference represents an uncertainty of the first physical quantity, and the first difference is represented by a variance or a standard deviation.

19. The method according to claim 18, wherein the first physical quantity is a speed.

20. The method according to claim 19, wherein the method further comprises:

determining a first location corresponding to the estimated result; and
determining a second difference between a plurality of first locations corresponding to the plurality of estimated results, wherein the plurality of first locations are in a one-to-one correspondence with the plurality of estimated results, the second difference represents an uncertainty of the first location, and the second difference is represented by using a variance or a standard deviation.

21. The method according to claim 18, wherein the estimated result is represented by using a three-dimensional space coordinate system, and the estimated result comprises a first speed in a direction of a first coordinate axis of the three-dimensional space coordinate system and a second speed in a direction of a second coordinate axis of the three-dimensional space coordinate system; and
the method further comprises:

determining a first change rate of a first heading angle at the first speed, and determining a second change rate of the first heading angle at the second speed, wherein the first heading angle is an angle on a plane on which the first coordinate axis and the second coordinate axis are located; and
determining an uncertainty of the first heading angle based on the first change rate, the second change rate, an uncertainty of the first speed, and an uncertainty of the second speed.

22. The method according to claim 21, wherein the determining a first change rate of a first heading angle at the first speed, and determining a change rate of the first heading angle at the second speed comprises:

obtaining a first expression by using the first speed and the second speed that represent a first heading angle;
performing first-order partial derivative calculation of the first speed on the first expression, to obtain the first change rate; and
performing first-order partial derivative calculation of the second speed on the first expression, to obtain the second change rate.

23. A computing device, comprising a processor and a memory, wherein the memory is configured to store a computer program, and the processor is configured to execute the computer program to implement the method according to any one of claims 1 to 12.

24. A computing device, comprising a processor and a memory, wherein the memory is configured to store a computer program, and the processor is configured to execute the computer program to implement the method according to any one of claims 13 to 17.

25. A computing device, comprising a processor and a memory, wherein the memory is configured to store a computer program, and the processor is configured to execute the computer program to implement the method according to any one of claims 18 to 22.

26. A computer-readable storage medium, comprising computer program instructions, wherein when the computer program instructions are executed by a computing device, the computing device performs the method according to any one of claims 1 to 12, 13 to 17, or 18 to 22.

27. A computer program product comprising instructions, wherein when the instructions are run by a computing device, the computing device is enabled to perform the method according to any one of claims 1 to 12, 13 to 17, or 18 to 22.

FIG. 1

FIG. 2

FIG. 3

Self-supervision parameter update

IMU data I11

IMU data I21

Data preprocessing

Signal representation

Similarity calculation

Feature extraction module

FIG. 4

FIG. 5

FIG. 6

FIG. 7

EP 4 400 991 A1

EP 4 400 991 A1

```
┌──────────┐    ┌──────────┐    ┌──────────┐    ┌──────────┐    ┌──────────┐    ┌──────────┐    ┌──────────────────┐
│ Data of a│    │ Sampling │    │Coordinate│    │ Random   │    │Preparation│   │Truth value│   │   Anchor data    │
│ training │╌╌▶ │interpola- │╌╌▶│alignment │╌╌▶ │windowing │╌╌▶ │of rotation│╌╌▶│  speed    │╌╌▶│Device conjugate  │
│trajectory│    │  tion    │    │          │    │          │    │conjugate  │   │calculation│   │     data         │
└──────────┘    └──────────┘    └──────────┘    └──────────┘    │   data    │   └──────────┘   │Rotation conjugate│
                                                                └──────────┘                   │     data         │
                                                                                               │ Truth value speed│
                                                                                               └──────────────────┘
```

FIG. 8A

FIG. 8B

Feature
vector

1x1conv
64 filters

Norm

Linear
ReLu

Linear
ReLu

Linear

$(v_x, v_y, v_z)$

FIG. 8C

Anchor data

Device conjugate data

Rotation conjugate data

Signal representation

Feature
extraction
module

Rotation
conjugate vector

Anchor
vector

Device
conjugate
vector

Speed
estimation

Anchor speed

Rotation
conjugate
speed

Label estimation module

FIG. 8D

44

FIG. 8E

$$L1 = \begin{cases} 1 - \dfrac{\hat{v}_1}{\|\hat{v}_1\|_2} \cdot \dfrac{\hat{v}_2}{\|\hat{v}_2\|_2} & (\|\hat{v}_1\|_2 > 0.5) \\ 0 & (\|\hat{v}_1\|_2 \leq 0.5) \end{cases}$$

| Anchor vector $p_1$ | Device conjugate vector $z_2$ | $$\mathcal{D}(p, z) = -\frac{p}{\|p\|_2} \cdot \frac{z}{\|z\|_2}$$ | $L2 = \frac{1}{2}\mathcal{D}(p_1, z_2) + \frac{1}{2}\mathcal{D}(p_2, z_1)$ |
| Anchor vector $z_1$ | Device conjugate vector $p_2$ | | |

FIG. 8F

$$L3 = \sum (v - \hat{v})^2$$

Anchor speed $\hat{v}$

Truth value speed $v$

FIG. 8G

| Data of a training trajectory | Sampling interpolation | Coordinate alignment | Sliding windowing | Calculation of a truth value speed and a truth value location | Window IMU data<br>Truth value speed<br>Truth value location |

FIG. 9A

FIG. 9B

**Estimated** **Truth value**
**speed $\widehat{v}_t$** **speed $v_t$**

$$l_{t,t+n} = \sum_{i=0}^{n} \|v_{t+i} * dt\|$$

$$\hat{l}_{t,t+n} = \sum_{i=0}^{n} \|\hat{v}_{t+i} * dt\|$$

$$\boldsymbol{loss_l} = \left| l_{t,t+n} - \hat{l}_{t,t+n} \right|$$

FIG. 9C

**Estimated** **Truth value**
**speed $\widehat{v}_t$** **speed $v_t$**

$$\boldsymbol{loss_a} = -\frac{1}{n+1}\sum_{i=0}^{n}\frac{v_{t+i}}{\|v_{t+i}\|_2}\cdot\frac{\hat{v}_{t+i}}{\|\hat{v}_{t+i}\|_2}$$

FIG. 9D

| Measured IMU data | ⇢ | Data loss check | ⇢ | Sampling interpolation | ⇢ | Rotation coordinate |

FIG. 10A

FIG. 10B

FIG. 10C

FIG. 11A

FIG. 11B

FIG. 11C

FIG. 12A

FIG. 12B

EP 4 400 991 A1

FIG. 12C

——— Estimated trajectory

-------- Truth value trajectory

FIG. 13A

——— Estimated trajectory

------- Truth value trajectory

FIG. 13B

——— Estimated trajectory

------- Truth value trajectory

FIG. 13C

FIG. 14A

FIG. 14B

Estimated trajectory

- - - - - Estimated trajectory

............ Truth value trajectory

FIG. 14C

Truth value
trajectory

Estimated trajectory
– – – – · after segmentation and
reconstruction

·············· Truth value trajectory

Estimated trajectory
after segmentation and
reconstruction

FIG. 14D

1501 — Obtain first IMU data generated by a first inertial measurement unit in a first time period, where the first inertial measurement unit moves along a first trajectory in the first time period

1502 — Obtain second IMU data, where the first IMU data and the second IMU data use a same coordinate system, and the second IMU data and the first IMU data have a preset correspondence

1503 — In a feature extraction module, extract a first feature of the first IMU data, and extract a second feature of the second IMU data

1504 — In a label estimation module, determine a first label based on the first feature, and determine a second label based on the second feature, where the first label and the second label correspond to a first physical quantity

1505 — Determine a first difference between the first label and the second label

1506 — Perform a first update on a parameter of the feature extraction module and a parameter of the label estimation module in a direction of reducing the first difference

FIG. 15

1601 — Obtain first measured IMU data of a first object, where the first measured IMU data is generated by an inertial measurement unit on the first object in a first time period

1602 — Extract, in a feature extraction module, a first feature of the first measured IMU data

1603 — Determine, in a label estimation module based on the first feature of the first measured IMU data, a first measured label corresponding to the first object, where the first measured label corresponds to a first physical quantity

1604 — Determine a trajectory of the first object in the first time period based on the first measured label

FIG. 16

1701 Obtain a plurality of estimation results output by a plurality of trajectory estimation models, where the plurality of trajectory estimation models are in a one-to-one correspondence with the plurality of estimation results, the plurality of estimation results correspond to a first physical quantity, and different trajectory estimation models in the plurality of trajectory estimation models have independent training processes and a same training method

1702 Determine a first difference between the plurality of estimation results, where the first difference represents an uncertainty of the first physical quantity, and the first difference is represented by a variance or a standard deviation

FIG. 17

Processor
1810

Memory
1820

FIG. 18

## INTERNATIONAL SEARCH REPORT

| International application No. |
| --- |
| **PCT/CN2022/120740** |

**A.     CLASSIFICATION OF SUBJECT MATTER**

G06K 9/62(2022.01)i

According to International Patent Classification (IPC) or to both national classification and IPC

**B.     FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

DWPI, CNABS, CNKI, DWPABS, CNTXT: 惯性, 测量, 导航, 轨迹, 坐标, 比较, inertia, measurement, navigation, trajectory, coordinates, comparison

**C.     DOCUMENTS CONSIDERED TO BE RELEVANT**

| Category* | Citation of document, with indication, where appropriate, of the relevant passages | Relevant to claim No. |
| --- | --- | --- |
| A | CN 108896044 A (HUNAN GLONAVIN INFORMATION TECHNOLOGY CO., LTD.) 27 November 2018 (2018-11-27) entire document | 1-27 |
| A | CN 109238279 A (NANJING WO XU WIRELESS CO., LTD.) 18 January 2019 (2019-01-18) entire document | 1-27 |
| A | US 10282574 B1 (MOTOROLA MOBILITY LLC) 07 May 2019 (2019-05-07) entire document | 1-27 |
| A | CN 113137967 A (UBTECH ROBOTICS CORP.) 20 July 2021 (2021-07-20) entire document | 1-27 |
| A | CN 106094822 A (CHINA JILIANG UNIVERSITY) 09 November 2016 (2016-11-09) entire document | 1-27 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 November 2022** | **07 December 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

| | | International application No. |
| --- | --- | --- |
| | | **PCT/CN2022/120740** |

| Patent document cited in search report | | | Publication date (day/month/year) | Patent family member(s) | Publication date (day/month/year) |
| --- | --- | --- | --- | --- | --- |
| CN | 108896044 | A | 27 November 2018 | None | |
| CN | 109238279 | A | 18 January 2019 | None | |
| US | 10282574 | B1 | 07 May 2019 | None | |
| CN | 113137967 | A | 20 July 2021 | None | |
| CN | 106094822 | A | 09 November 2016 | None | |

Form PCT/ISA/210 (patent family annex) (January 2015)

**EP 4 400 991 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111165311X